(19) Europäisches Patentamt / European Patent Office / Office européen des brevets

(11) **EP 4 119 813 B1**

(12) **EUROPEAN PATENT SPECIFICATION**

(45) Date of publication and mention
of the grant of the patent:
**25.12.2024 Bulletin 2024/52**

(21) Application number: **21771249.6**

(22) Date of filing: **14.03.2021**

(51) International Patent Classification (IPC):
**F16H 1/32** *(2006.01)* **F16H 55/10** *(2006.01)*

(52) Cooperative Patent Classification (CPC):
**F16H 1/32; F16H 55/10**

(86) International application number:
**PCT/CN2021/080652**

(87) International publication number:
**WO 2021/185189 (23.09.2021 Gazette 2021/38)**

(54) **COMBINED TOOTH SURFACE CYCLOIDAL MOVABLE TOOTH TRANSMISSION MECHANISM**

KOMBINIERTER ZYKLOIDER GETRIEBEMECHANISMUS MIT ZAHNOBERFLÄCHE

MÉCANISME DE TRANSMISSION À DENTS MOBILES CYCLOÏDALES À SURFACE DE DENT COMBINÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2020 CN 202010178794**
**15.03.2020 CN 202010178795**
**15.03.2020 CN 202010178798**
**15.03.2020 CN 202010178797**
**18.04.2020 CN 202010308664**
**12.09.2020 CN 202010956765**
**25.11.2020 CN 202011339224**
**11.03.2021 CN 202110264135**
**11.03.2021 CN 202110264416**

(43) Date of publication of application:
**18.01.2023 Bulletin 2023/03**

(73) Proprietor: **Henan Zhulong Hi-Tech Co., Ltd.**
**XinXiang City, Henan 453000 (CN)**

(72) Inventors:
• **YAN, Jidong**
**XinXiang City, Henan 453000 (CN)**
• **XING, Pengda**
**Qinhuangdao City, Hebei 066000 (CN)**

(74) Representative: **Bayramoglu et al.**
**Mira Office**
**Kanuni Sultan Süleyman Boulevard 5387**
**Street Beytepe, floor 12, no:50**
**06800 Cankaya, Ankara (TR)**

(56) References cited:
**CN-A- 106 152 945      CN-A- 106 594 227**
**CN-A- 107 165 986      CN-A- 107 327 543**
**CN-A- 111 237 397      CN-A- 111 237 398**
**CN-A- 111 396 521      US-A- 5 286 236**
**US-A1- 2019 285 152**

## Description

### TECHNICAL FIELD

The present invention relates to the technical field of movable tooth transmission, and in particular to a cycloidal movable tooth transmission mechanism with a combined tooth surface.

### BACKGROUND

There are many types of movable tooth transmission, such as chordal movable tooth transmission and cycloidal movable tooth transmission, which are generally distinguished by the shape and motion characteristics of the movable teeth. Existing design guidelines require that the movable tooth race be free of undercuts. Taking the cycloidal movable tooth transmission as an example, Chinese Patent Application CN201721031991.5 proposes a cycloidal steel ball reducer and a robot joint, which clearly proposes that the meshing tooth surface must avoid undercutting and the conditions for avoiding undercutting. The resulting problem is a low power density, which means a large size, a small transmission ratio, and insufficient space utilization, thereby lacking market competitiveness. In this regard, it is urgent to design a movable tooth transmission reducer with excellent performance, with the core transmission mechanism of the reducer as the most important part of the design.

The patent publication no. CN107165986A discloses a cycloidal transmission mechanism of speed reduces based on rolling cone pieces. The speed reducer in question comprises a cycloid disk, a transmission element and an output disk. The transmission element in question is a rolling cone. The main object of the invention is to provide a cycloid transmission mechanism of a reducer based on a rolling cone, which has a large transmission power and little wear on a trajectory groove of a cycloid.

The patent publication no. CN106152945A discloses a cycloid planetary reducer cycloid disc eccentricity deviation detection method. The method in question comprises the steps: S1, the actual cycloid capture step: capturing the actual cycloid and reference circle on the cycloidal disc; S2: virtual circle generation step: capturing the center of the reference circle and the peaks and troughs on the actual cycloid in the graphics processing software; and drawing a virtual circle of the peak tangent to the peak of the actual pendulum centered on the center of the reference circle And a trough virtual circle tangent to the trough of the actual pendulum; S3. Actual eccentricity calculation step: obtain the radius R1 of the peak virtual circle and the radius R2 of the trough virtual circle, and obtain the actual eccentricity e1 by the following formula: E1=(R1-R2)/2 and S4. The eccentricity deviation calculation step: the actual eccentricity e1 and the design eccentricity e are subtracted, that is, the eccentricity deviation of the cycloidal disk is obtained. In the figures transmission mechanisms comprising cycloidal gear and movable gear.

The patent publication no. US2019285152A1 disloses a speed reducer. The main object of the invention is to provide a speed reducer which is capable of achieving a small size and a high speed reduction ratio, and capable of suppressing fluctuation in rotation speed and vibration on the output side. In the figures, transmission mechanism with cycloidal gears and a movable gear.

Although the prior art documents provide improvements in transmission mechanisms, the efficiency can be considered low due to friction. Therefore, the need for a transmission mechanism with high efficiency still remains.

### SUMMARY

In view of the above problems, the present invention proposes a cycloidal movable tooth transmission mechanism with a combined tooth surface. The cycloidal movable tooth transmission mechanism with a combined tooth surface is based on a combined tooth surface cycloid race and takes a combined tooth surface cycloidal movable tooth meshing pair as a core. the cycloidal movable tooth transmission mechanism with a combined tooth surface includes a single-stage cycloidal movable tooth transmission unit with a combined tooth surface, a single-stage closely-packed cycloidal movable tooth transmission unit with a combined tooth surface, a two-tooth-difference closely-packed cycloidal movable tooth transmission unit with a combined tooth surface, and a double-output two-tooth-difference cycloidal movable tooth transmission unit with a combined tooth surface. These transmission units can be connected in series, in parallel, or in series and parallel to form a more complex multi-stage transmission unit, which can be used in a reducer in a variety of forms. A tooth surface of the combined tooth surface cycloid race is composed of three different tooth surfaces that are discretized. A union of meshing curves of all the tooth surfaces forms a complete cycloid, either a hypocycloid or an epicycloid.

The present invention adopts the technical solution as set out in claim 1. Preferred embodiments are set out in the dependent claims.

**BRIEF DESCRIPTION OF THE DRAWINGS**

FIG. 1 is a schematic view of a generation principle of a movable tooth according to the present invention;

FIGS. 2, 3, and 4 are schematic views of partitioning a cross section of the movable tooth according to the present invention;

FIG. 5 is a schematic view of a relationship between an actual movable tooth surface and a theoretical movable tooth surface according to the present invention;

FIG. 6 is a schematic view of coordinate system setting and structure of a cycloidal gear with a combined tooth surface epicycloid race according to the present invention;

FIG. 7 is a schematic view of a generation principle of a negative tooth surface of the cycloidal gear with the combined tooth surface epicycloid race according to the present invention;

FIG. 8 is a schematic view of a combination of negative tooth surfaces of the cycloidal gear with the combined tooth surface epicycloid race according to the present invention;

FIG. 9 is a schematic view of a generation principle of a positive tooth surface of the cycloidal gear with the combined tooth surface epicycloid race according to the present invention;

FIG. 10 is a schematic view of a combination of positive tooth surfaces of the cycloidal gear with the combined tooth surface epicycloid race according to the present invention;

FIG. 11 is a schematic view of a positive rotary-cut surface of the cycloidal gear with the combined tooth surface epicycloid race according to the present invention;

FIGS. 12 and 13 are schematic views of the positive rotary-cut section of the cycloidal gear with the combined tooth surface epicycloid race according to the present invention;

FIG. 14 is a schematic view of coordinate system setting and structure of a cycloidal gear with a combined tooth surface hypocycloid race according to the present invention;

FIG. 15 is a schematic view of a generation principle of a positive tooth surface of the cycloidal gear with the combined tooth surface hypocycloid race according to the present invention;

FIG. 16 is a schematic view of a combination of positive tooth surfaces of the cycloidal gear with the combined tooth surface hypocycloid race according to the present invention;

FIG. 17 is a schematic view of a generation principle of a negative tooth surface of the cycloidal gear with the combined tooth surface hypocycloid race according to the present invention;

FIG. 18 is a schematic view of a combination of negative tooth surfaces of the cycloidal gear with the combined tooth surface hypocycloid race according to the present invention;

FIG. 19 is a schematic view of a negative rotary-cut section of the cycloidal gear with the combined tooth surface hypocycloid race according to the present invention;

FIGS. 20 and 21 are schematic views of the negative rotary-cut surface of the cycloidal gear with the combined tooth surface hypocycloid race according to the present invention;

FIGS. 22 and 23 are exploded views of a single-stage cycloidal movable tooth transmission unit with a combined tooth surface with a meshing curve of an epicycloid according to Embodiment 1 of the present invention;

FIGS. 24 and 25 are sectional views of the single-stage cycloidal movable tooth transmission unit with a combined tooth surface with a meshing curve of an epicycloid according to Embodiment 1 of the present invention;

FIGS. 26 and 27 are exploded views of a single-stage cycloidal movable tooth transmission unit with a combined tooth surface with a meshing curve of a hypocycloid according to Embodiment 2 of the present invention;

FIGS. 28 and 29 are sectional views of the single-stage cycloidal movable tooth transmission unit with a combined tooth surface with a meshing curve of a hypocycloid according to Embodiment 2 of the present invention;

FIG. 30 is a schematic view of coordinate system setting and structure of a movable gear in a single-stage closely-packed cycloidal movable tooth transmission unit with a combined tooth surface according to the present invention;

FIGS. 31 and 32 are exploded views of the single-stage closely-packed cycloidal movable tooth transmission unit with a combined tooth surface with a meshing curve of an epicycloid according to Embodiment 3 of the present invention;

FIGS. 33 and 34 are sectional views of the single-stage closely-packed cycloidal movable tooth transmission unit with a combined tooth surface with a meshing curve of an epicycloid according to Embodiment 3 of the present invention;

FIGS. 35 and 36 are exploded views of a single-stage closely-packed cycloidal movable tooth transmission unit with a combined tooth surface with a meshing curve of a hypocycloid according to Embodiment 4 of the present invention;

FIGS. 37 and 38 are sectional views of the single-stage closely-packed cycloidal movable tooth transmission unit with a combined tooth surface with a meshing curve of a hypocycloid according to Embodiment 4 of the present invention;

FIGS. 39 and 40 are exploded views of a two-tooth-difference closely-packed cycloidal movable tooth transmission unit with a combined tooth surface according to Embodiment 5 of the present invention;

FIGS. 41 and 42 are sectional views of the two-tooth-difference closely-packed cycloidal movable tooth transmission unit with a combined tooth surface according to Embodiment 5 of the present invention;

FIGS. 43 are sectional views of a double-output two-tooth-difference cycloidal movable tooth transmission unit with a combined tooth surface according to Embodiment 6 of the present invention;

FIGS. 44 and 45 are exploded views of the double-output two-tooth-difference cycloidal movable tooth transmission unit with a combined tooth surface according to Embodiment 6 of the present invention;

FIG. 46 is a sectional view of the double-output two-tooth-difference cycloidal movable tooth transmission unit with a combined tooth surface according to Embodiment 7 of the present invention;

FIGS. 47 and 48 are exploded views of the double-output two-tooth-difference cycloidal movable tooth transmission unit with a combined tooth surface according to Embodiment 7 of the present invention;

FIG. 49 is a sectional view of the double-output two-tooth-difference cycloidal movable tooth transmission unit with a combined tooth surface according to Embodiment 8 of the present invention;

FIGS. 50 and 51 are exploded views of the double-output two-tooth-difference cycloidal movable tooth transmission unit with a combined tooth surface according to Embodiment 8 of the present invention;

FIG. 52 is a sectional view of a mechanically-balanced reducer using a cycloidal movable tooth transmission with a combined tooth surface race according to Embodiment 9 of the present invention;

FIGS. 53 and 54 are exploded views of the mechanically-balanced reducer using a cycloidal movable tooth transmission with a combined tooth surface race according to Embodiment 9 of the present invention;

FIG. 55 is a sectional view of a lightweight cycloidal movable tooth reducer according to Embodiment 10 of the present invention;

FIGS. 56 and 57 are exploded views of the lightweight cycloidal movable tooth reducer according to Embodiment 10 of the present invention;

FIG. 58 is a sectional view of the lightweight cycloidal movable tooth reducer according to Embodiment 11 of the present invention;

FIGS. 59 and 60 are exploded views of the lightweight cycloidal movable tooth reducer according to Embodiment 11 of the present invention;

FIG. 61 is a sectional view of an integrated flat movable tooth transmission brushless motor according to Embodiment 12 of the present invention;

FIGS. 62 and 63 are exploded views of the integrated flat movable tooth transmission brushless motor according to Embodiment 12 of the present invention;

FIG. 64 is a sectional view of the integrated flat movable tooth transmission brushless motor according to Embodiment 13 of the present invention;

FIG. 65 is a full structural view of an integrated cycloid steel ball movable tooth transmission mechanical dog according to Embodiment 14 of the present invention;

FIG. 66 is an exploded view of a body module according to Embodiment 14 of the present invention;

FIG. 67 is a structural view of a crotch joint module according to Embodiment 14 of the present invention;

FIG. 68 is a structural view of a thigh joint module according to Embodiment 14 of the present invention;

FIG. 69 is a structural view of a calf joint module according to Embodiment 14 of the present invention;

FIG. 70 is a structural view of a thigh module according to Embodiment 14 of the present invention;

FIG. 71 is a structural view of a tensioning device according to Embodiment 14 of the present invention; and

FIG. 72 is an exploded view of a calf module according to Embodiment 14 of the present invention;

Reference Numerals: 1. combined tooth surface race; 2. movable tooth; 3. cycloidal gear; 4. movable gear; 5. movable tooth slot; 6. first input shaft; 7. first fixed wheel; 8. first movable tooth; 9. first transition wheel; 10. mechanical balance rolling element; 11. first housing; 12. first end cover; 13. first screw; 14. closely-packed steel ball; 15. first sealing washer; 16. first output wheel; 17. second movable tooth; 18. first sealing ring; 19. first bearing; 20. second bearing; 21. first plug; 22. first set screw; 23. second screw; 24. second input shaft; 25. second fixed wheel; 26. second transmission wheel; 27. second housing; 28. second end cover; 29. second output wheel; 30. third movable tooth; 31. first constant-speed tooth; 32. third bearing; 33. fourth bearing; 34. fifth bearing; 35. second sealing washer; 36. third screw; 37. second set screw; 38. motor housing; 39. third fixed wheel; 40. first output bearing ring; 41. second output bearing ring; 42. fourth screw; 43. third output wheel; 44. third transmission wheel; 45. drive shaft; 46. sixth bearing; 47. first rolling element; 48. third sealing washer; 49. second rolling element; 50. second constant-speed tooth; 51. fourth movable tooth; 52. fifth screw; 53. stator core; 54. rotor frame; 55. copper coil; 56. permanent magnet; 57. yoke sleeve; 58. sixth screw; 59. first cover; 60. servo control module; 61. second cover; 62. seventh screw; 63. fourth sealing washer; 64. eighth screw; 65. body module; 66. crotch joint module; 67. thigh joint module; 68. calf joint module; 69. thigh module; 70. calf module; 101. positive tooth surface; 102. negative tooth surface; 103. positive rotary-cut surface; 104. negative rotary-cut surface; 201. movable tooth surface; 301. epicycloidal gear; 302. hypocycloidal gear; 501. contact slot surface; 502. non-contact slot surface; 2401. eccentric shaft segment; 2501. first meshing pair; 2601. second meshing pair; 2602. third meshing pair; 2701. inner thread pair; 2801. outer thread pair; 2901. fourth meshing pair; 25a. first split wheel; 25b. second split wheel; 25a1. orientation boss; 25b1. inner thread pair; 25b2. orientation recess; 6501. first body; 6502. second body; 6503. third body; 6601. crotch joint integrated motor; 6602. crotch support; 6701. thigh joint integrated motor; 6702. thigh support; 6801. calf joint integrated motor; 6802. first pulley; 6901. first thigh plate; 6902. second thigh plate; 6903. timing belt; 6904. tensioning device; 6905. tensioning screw; 6906. calf joint bearing; 6907. second pulley;

690401. box body; 690402. pre-tightening wedge; 690403. sliding wedge; 690404. roller; 690405. roller shaft; 7001. first calf plate; 7002. second calf plate; and 7003. foot module.

## DETAILED DESCRIPTION OF THE EMBODIMENTS

The technical solutions of the embodiments of the present invention are clearly and completely described below with reference to the accompanying drawings. Apparently, the described embodiments are merely a part rather than all of the embodiments of the present invention.

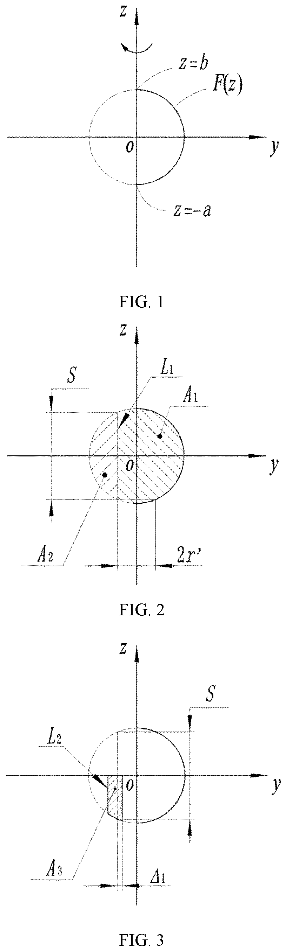

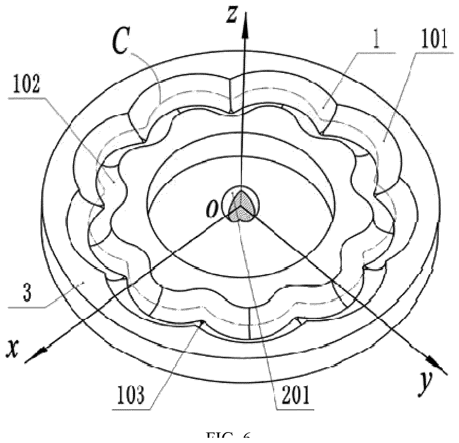

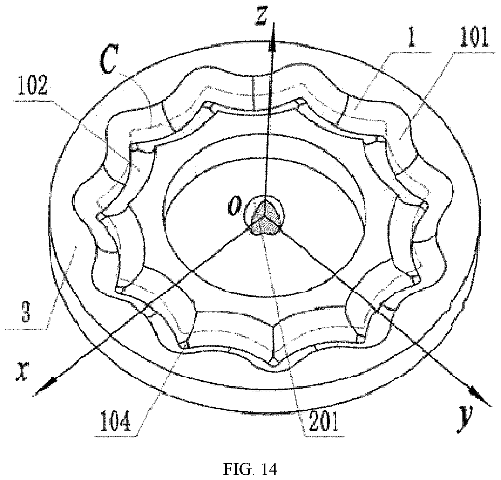

In order to facilitate the description of the generation principle of the combined tooth surface race, a unified coordinate system is first established for each element, as shown in FIGS. 1, 6, 14, and 30. FIGS. 1 to 5 are schematic views of the generation process of the movable tooth, the method of section partitioning, and the relationship between the actual and theoretical meshing tooth surfaces. FIGS. 6 to 13 show the generation process of the combined tooth surface race when the meshing curve C is an epicycloid. FIGS. 14 to 21 show the generation process of the combined tooth surface race when the meshing curve C is a hypocycloid. It is stipulated that the direction indicated by the circumference of the cycloidal gear outward is positive, and the direction indicated by the circumference of the cycloidal gear inward is negative.

When the meshing curve is an epicycloid, its parametric equations in an *xoy* plane are:

$$\begin{cases} x = R\cos\varphi - A\cos[(1+Z_c)\varphi] \\ y = R\sin\varphi - A\sin[(1+Z_c)\varphi] \end{cases} \quad \varphi \in [0, 2\pi)$$

When the meshing curve is a hypocycloid, its parametric equations in the *xoy* plane are:

$$\begin{cases} x = R\cos\varphi + A\cos[(1-Z_c)\varphi] \\ y = R\sin\varphi + A\sin[(1-Z_c)\varphi] \end{cases} \quad \varphi \in [0, 2\pi)$$

In the above equations, R denotes a radius of the meshing curve; A denotes an amplitude of the meshing curve; and $Z_c$ denotes a wave number of the hypocycloid or epicycloid.

Therefore, the curvature radius $p$ of the meshing curve C is:

$$\rho = \frac{\sqrt{\left[\left(\dfrac{dx}{d\varphi}\right)^2 + \left(\dfrac{dy}{d\varphi}\right)^2\right]^3}}{\dfrac{dx}{d\varphi}\dfrac{d^2y}{d\varphi^2} - \dfrac{dy}{d\varphi}\dfrac{d^2x}{d\varphi^2}} \quad \varphi \in [0, 2\pi)$$

As shown in FIG. 1, in the *zoy* plane, there is an arbitrary continuous curve $y=F(z)$ that passes through the positive semi-axis of the *y*-axis but not the *z*-axis, and this curve forms the generatrix of the movable tooth. Assuming that *a* and *b* are any positive real numbers, the movable tooth is formed by rotating a closed curve, composed of four curves $y=F(z)$, $z=-a$, $z=b$, and $y=0$, around the *z*-axis. When the meshing curve *C* is determined, the radius of the critical movable tooth section that causes the undercut of the meshing tooth surface can be determined. Let the maximum value of the curve $y=F(z)$ be $D_{max}$ when $z<0$, then $D_{max}$ satisfies:

$$D_{max} > \rho_{min}$$

In the equation, $\rho_{min}$ denotes a minimum curvature radius $p$ of the cycloid.

As shown in FIG. 2, a chord $L_1$ is drawn in the movable tooth section, and the movable tooth section is divided into two arc sections, namely a superior arc section $A_1$ and an inferior arc section $A_2$, whose geometric centers are the origin o. The length of the chord $L_1$ is S. A chord is introduced, which is perpendicular to the z-axis and passes through the intersection of the chord $L_1$ and the lower side of the movable tooth section, and the chord has a length of *2r'*, then *r'* satisfies:

$$0 \le r' \le \rho_{\min}$$

In particular, if the movable tooth is a standard ball with a radius of $r$, the length S of the chord $L_1$ can be calculated by the following equation:

$$S = 2\sqrt{r^2 - r'^2}$$

In particular, when the value of $r'$ is zero, the superior arc section and the inferior arc section are completely symmetrical, and both become half sections.

FIGS. 6 to 13 illustrate a first example of the generation principle of the combined tooth surface race of the present invention. The meshing curve $C$ adopts an epicycloid in the *xoy* plane, and the cycloidal gear is a hollow disc located on the lower side of the *xoy* plane and the negative half of the *z*-axis. The combined tooth surface race is composed of three types of tooth surfaces, namely the positive tooth surfaces, the negative tooth surfaces, and the positive rotary-cut surfaces, which are respectively totaled $Z_c$ and are evenly distributed about the *z*-axis.

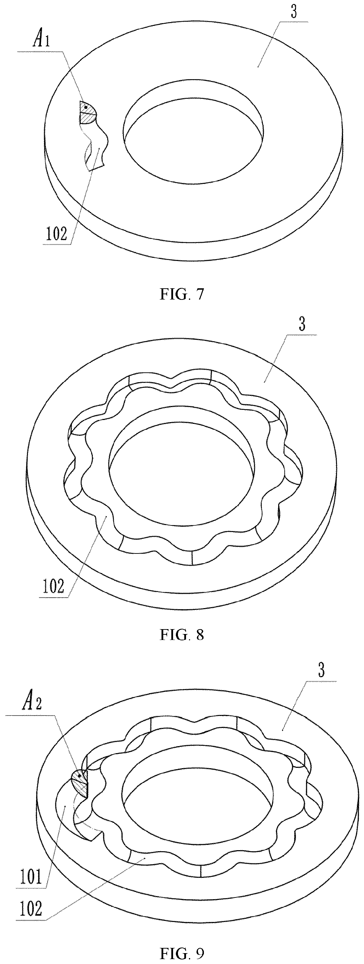

As shown in FIG. 7, a complete band is taken out of the $Z_c$ waves of the epicycloid. The trough of the band is located in the center, and the two sides of the band are symmetrical about the center. The geometric center of the superior arc section $A_1$ is placed on the end point on one side of the band, and the chord of the superior arc section faces the positive direction. The geometric center of the superior arc section is moved on the band, from the beginning to the end. During the motion, the chord is always parallel to the *z*-axis, and the section is always perpendicular to the band. The intersecting surface of the envelope surface of the superior arc motion of the superior arc section and the cycloidal gear forms the negative tooth surface.

As shown in FIG. 8, the negative tooth surfaces are evenly arrayed about the *z*-axis, thereby forming $Z_c$ negative tooth surfaces connected end to end.

As shown in FIG. 9, a symmetric band is arbitrarily taken out of the $Z_c$ waves of the epicycloid. The crest of this band is located in the center, and the two sides of the band are symmetrical about the center. The minimum curvature radius $\rho_{1\min}$ on this symmetrical band satisfies:

$$\rho_{1\min} \ge D_{\max}$$

The geometric center of the inferior arc section $A_2$ is placed on the end point of one side of the band, such that the chord of the inferior arc section faces the negative direction. The geometric center of the inferior arc section is moved on the band, from the beginning to the end. During the motion, the chord is always parallel to the *z*-axis, and the section is always perpendicular to the band. The intersecting surface of the envelope surface of the inferior arc motion of the inferior arc section and the cycloidal gear forms the positive tooth surface.

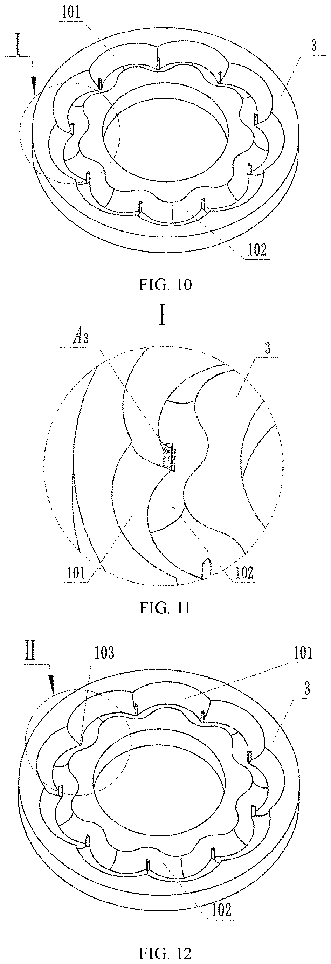

As shown in FIG. 10, the positive tooth surfaces are evenly arrayed about the *z*-axis, thereby forming $Z_c$ positive tooth surfaces that are connected end to end. In this way, $Z_c$ positive triangular prisms are formed, whose two sides are flat surfaces, and one side is an arc surface.

As shown in FIG. 11, a positive triangular prism with exactly the same two flat side surfaces is arbitrarily taken. One of the two flat side surfaces is arbitrarily taken, and the boundary where the flat side surface intersects the arc surface is extended to the outside to form the positive rotary-cut section, as shown in FIG. 3. The extension width $\Delta_1$ satisfies:

$$0 \le \Delta_1 \le r'$$

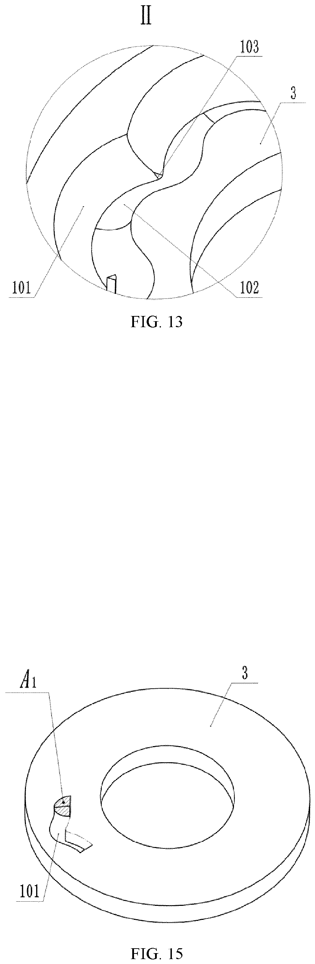

Let the intersection of the two flat side surfaces be $L_2$. The positive rotary-cut section is rotated from one flat side surface to the other flat side surface around the intersection $L_2$ of the two flat side surfaces to remove the triangular prism. The surface left on the cycloidal gear is the positive rotary-cut surface, as shown in FIGS. 12 and 13. The above operations are performed on all the positive triangular prisms to obtain $Z_c$ evenly distributed positive rotary-cut surfaces. In this way, the combined tooth surface race composed of the positive tooth surfaces, negative tooth surfaces, and positive rotary-cut surfaces, which are respectively totaled $Z_c$ and are evenly distributed about the *z*-axis, is finally obtained, as shown in FIG. 6.

FIGS. 14 to 21 illustrate a second example of the generation principle of the combined tooth surface race of the present invention. The meshing curve C adopts a hypocycloid in the *xoy* plane, and the cycloidal gear is a hollow disc located on the lower side of the *xoy* plane and the negative half of the *z*-axis. The combined tooth surface race is composed of three types of tooth surfaces, namely the positive tooth surfaces, the negative tooth surfaces, and the negative rotary-cut surfaces, which are respectively totaled $Z_c$ and are evenly distributed about the z-axis.

As shown in FIG. 15, a complete band is taken out of the $Z_c$ waves of the hypocycloid. The crest of the band is located in the center, and the two sides of the band are symmetrical about the center. The geometric center of the superior arc section $A_1$ is placed on the end point on one side of the band, and the chord of the superior arc section faces the negative direction. The geometric center of the superior arc section is moved on the band, from the beginning to the end. During the motion, the chord is always parallel to the z-axis, and the section is always perpendicular to the band. The intersecting surface of the envelope surface of the superior arc motion of the superior arc section and the cycloidal gear forms the positive tooth surface.

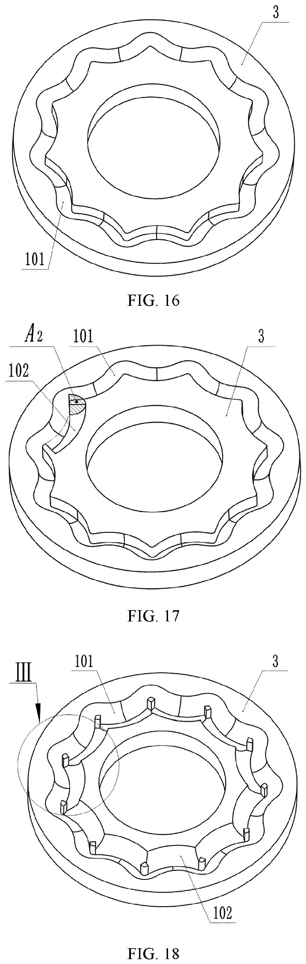

As shown in FIG. 16, the positive tooth surfaces are evenly arrayed about the z-axis, thereby forming $Z_c$ positive tooth surfaces connected end to end.

As shown in FIG. 17, a symmetric band is arbitrarily taken out of the $Z_c$ waves of the hypocycloid. The trough of this band is located in the center, and the two sides of the band are symmetrical about the center. The minimum curvature radius $\rho_{1\min}$ on this symmetrical band satisfies:

$$\rho_{1\min} \geq D_{\max}$$

The geometric center of the inferior arc section $A_2$ is placed on the end point of one side of the band, such that the chord of the inferior arc section faces the positive direction. The geometric center of the inferior arc section is moved on the band, from the beginning to the end. During the motion, the chord is always parallel to the z-axis, and the section is always perpendicular to the band. The intersecting surface of the envelope surface of the inferior arc motion of the inferior arc section and the cycloidal gear forms the negative tooth surface.

As shown in FIG. 18, the negative tooth surfaces are evenly arrayed about the z-axis, thereby forming $Z_c$ negative tooth surfaces connected end to end. In this way, $Z_c$ negative triangular prisms are formed, whose two sides are flat surfaces, and one side is an arc surface.

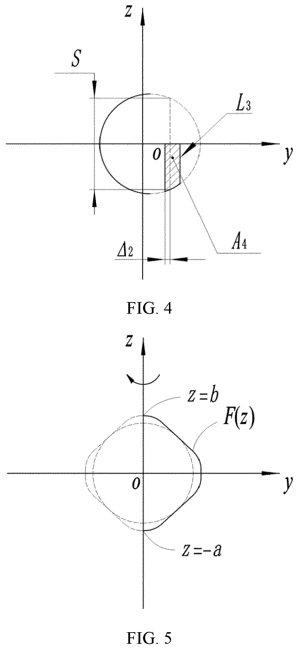

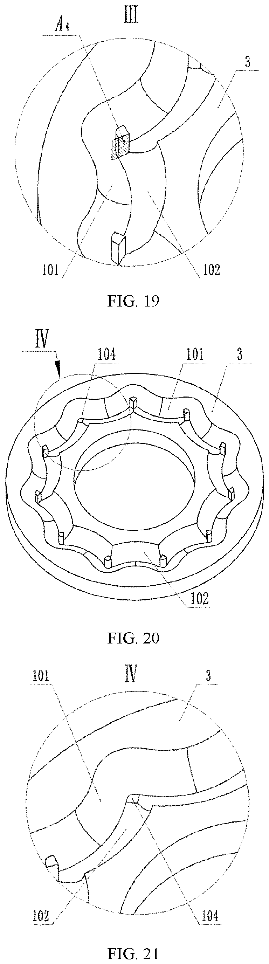

As shown in FIG. 19, a negative triangular prism with exactly the same two flat side surfaces is arbitrarily taken. One of the two flat side surfaces is arbitrarily taken, and the boundary where the flat side surface intersects the arc surface is extended to the outside to form the negative rotary-cut section, as shown in FIG. 4. The extension width $\Delta_2$ satisfies:

$$0 \leq \Delta_2 \leq r'$$

Let the intersection of the two flat side surfaces be $L_3$. The negative rotary-cut section is rotated from one flat side surface to the other flat side surface around the intersection $L_3$ of the two flat side surfaces to remove the triangular prism. The surface left on the cycloidal gear is the negative rotary-cut surface, as shown in FIGS. 20 and 21. The above operations are performed on all negative triangular prisms to obtain $Z_c$ evenly distributed negative rotary-cut surfaces. In this way, the combined tooth surface race composed of the positive tooth surfaces, negative tooth surfaces and negative rotary-cut surfaces, which are respectively totaled $Z_c$ and are evenly distributed about the z-axis, is finally obtained, as shown in FIG. 14.

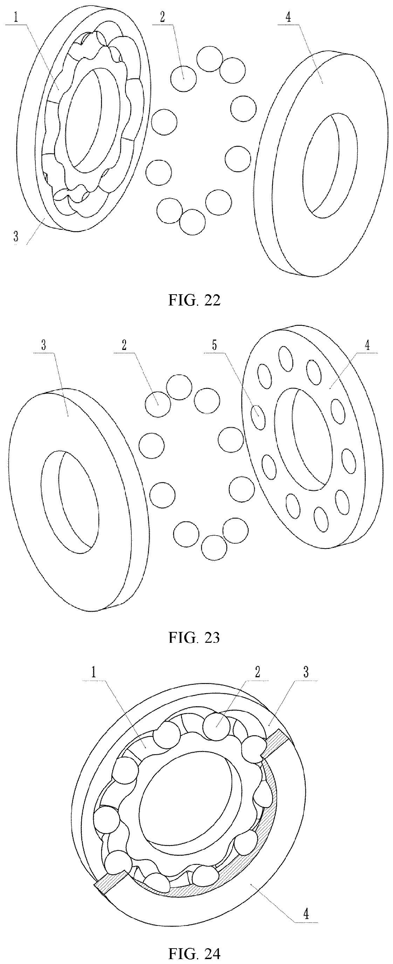

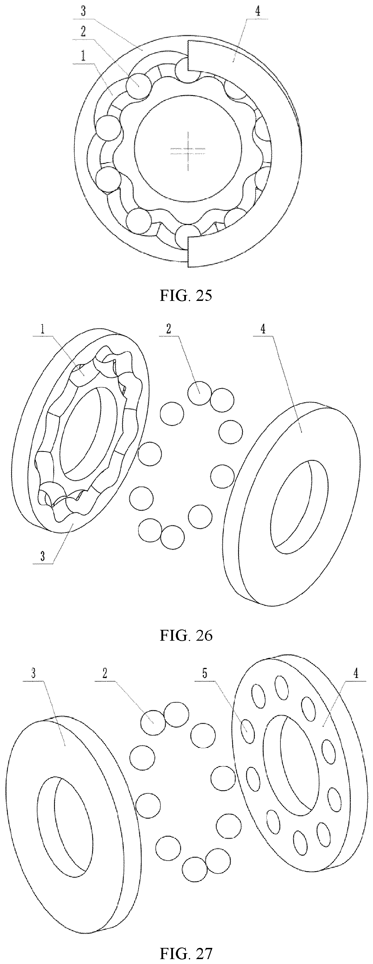

FIGS. 22 to 25 illustrate a single-stage cycloidal movable tooth transmission unit with a combined tooth surface according to Embodiment 1 of the present invention. In this embodiment, the meshing curve is an in-plane epicycloid, and the movable tooth is a standard ball. As shown in FIGS. 22 and 23, the combined tooth surface race has 9 waves, 10 movable teeth, and 10 movable tooth slots. As shown in FIGS. 24 and 25, the movable gear is eccentric with respect to the cycloidal gear. That is, the axes of the movable gear and the cycloidal gear are parallel to each other and are spaced apart by an eccentric distance. The eccentric distance is equal to the amplitude of the combined tooth surface race.

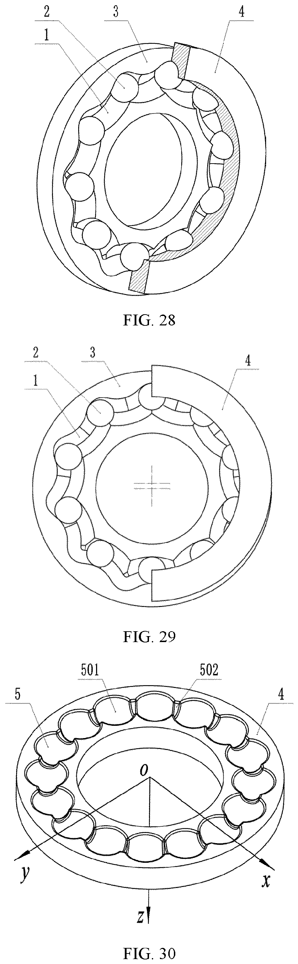

FIGS. 26 to 29 illustrate a single-stage cycloidal movable tooth transmission unit with a combined tooth surface according to Embodiment 2 of the present invention. In this embodiment, the meshing curve is an in-plane hypocycloid, and the movable tooth is a standard ball. As shown in FIGS. 26 and 27, the combined tooth surface race has 11 waves, 10 movable teeth, and 10 movable tooth slots. As shown in FIGS. 28 and 29, the movable gear is eccentric with respect to the cycloidal gear. That is, the axes of the movable gear and the cycloidal gear are parallel to each other and are spaced apart by an eccentric distance. The eccentric distance is equal to the amplitude of the combined tooth surface race.

The parameters in Embodiment 1 and Embodiment 2 are shown in Table 1.

Table 1 Theoretical structural parameters

| Name and Unit | Value |
| --- | --- |
| Number of movable teeth, $Z_b$ | 10 |
| Wave number of combined tooth surface race, $Z_c$ | Hypocycloid: 11; epicycloid: 9 |
| Radius of meshing curve (radius of distribution circle of movable tooth slot), $R$ (mm) | 19.5 |
| Eccentric distance between movable gear and cycloidal gear, $A$ (mm) | 1.2 |
| Radius of steel ball movable tooth, $r$ (mm) | 3 |

The transmission principles of the Embodiment 1 and Embodiment 2 are as follows. When the cycloidal gear is fixed, the axis of the movable gear is driven to revolve around the axis of the cycloidal gear. All the movable teeth meshing with the movable tooth slots on the movable gear mesh with the combined tooth surface race on the cycloidal gear at the same time. That is, all the movable teeth must move in the combined tooth surface race on the cycloidal gear, so as to react to the movable gear through the movable tooth slots to push the movable gear to rotate around its own axis. Each time when the axis of the movable gear revolves around the axis of the cycloidal gear for one circle, the movable gear is driven by the movable teeth to rotate around its own axis by a wave number of the combined tooth surface race, thereby realizing variable speed motion. When the movable gear is fixed, the axis of the cycloidal gear is driven to revolve around the axis of the movable gear. All the movable teeth meshing with the combined tooth surface race on the cycloidal gear mesh with the movable tooth slots on the movable gear at the same time. That is, all the movable teeth must move in the movable tooth slots on the movable gear, so as to react to the cycloidal gear through the combined tooth surface race to push the cycloidal gear to rotate around its own axis. Each time when the axis of the cycloidal gear revolves around the axis of the movable gear for one circle, the cycloidal gear is driven by the movable teeth to rotate around its own axis for the distance between two adjacent movable tooth slots, thereby realizing variable speed motion.

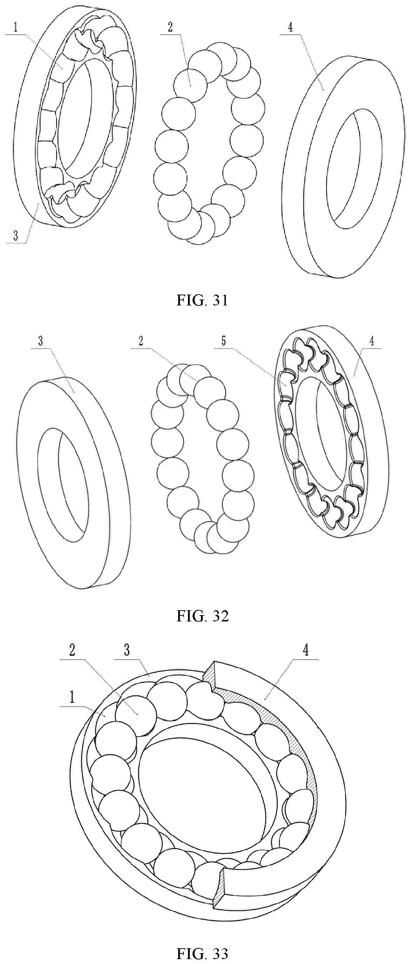

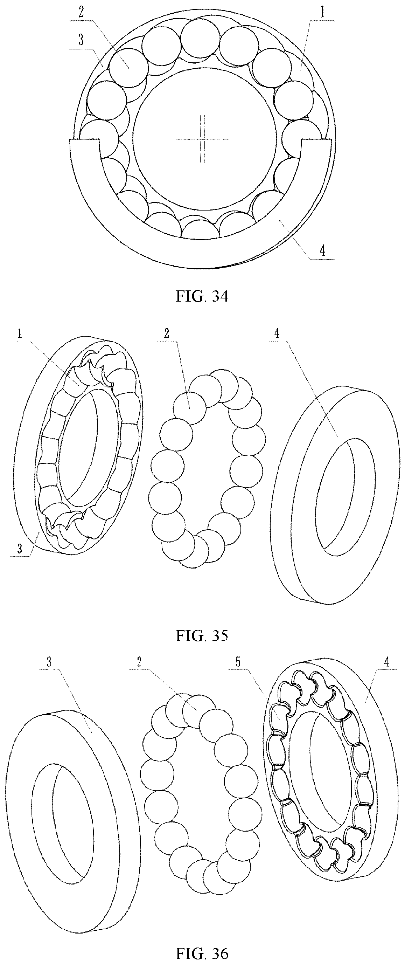

FIGS. 31 to 34 illustrate a single-stage closely-packed cycloidal movable tooth transmission unit with a combined tooth surface according to Embodiment 3 of the present invention. In this embodiment, the meshing curve is an in-plane epicycloid, and the movable tooth is a standard ball. As shown in FIGS. 31 and 32, the combined tooth surface race has 15 waves, 16 movable teeth, 16 contact slot surfaces, and 16 non-contact slot surfaces. As shown in FIGS. 33 and 34, the movable gear is eccentric with respect to the cycloidal gear. That is, the axes of the movable gear and the cycloidal gear are parallel to each other and are spaced apart by an eccentric distance. The eccentric distance is equal to the amplitude of the combined tooth surface race.

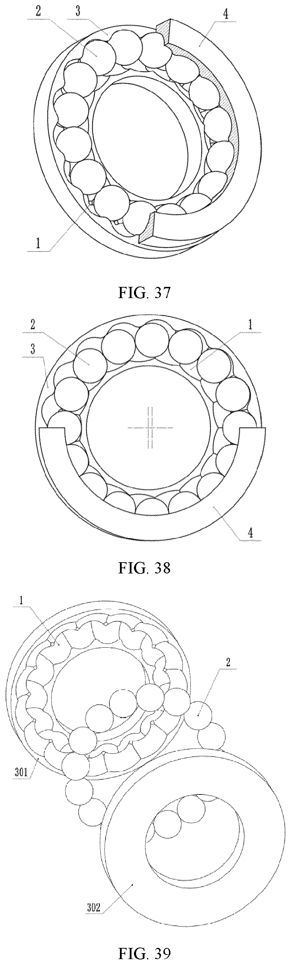

FIGS. 35 to 38 illustrate a single-stage closely-packed cycloidal movable tooth transmission unit with a combined tooth surface according to Embodiment 4 of the present invention. In this embodiment, the meshing curve is an in-plane hypocycloid, and the movable tooth is a standard ball. As shown in FIGS. 35 and 36, the combined tooth surface race has 17 waves, 16 movable teeth, 16 contact slot surfaces, and 16 non-contact slot surfaces. As shown in FIGS. 37 and 38, the movable gear is eccentric with respect to the cycloidal gear. That is, the axes of the movable gear and the cycloidal gear are parallel to each other and are spaced apart by an eccentric distance. The eccentric distance is equal to the amplitude of the combined tooth surface race.

In Embodiment 3 and Embodiment 4, the movable tooth is a standard ball, and its radius $r$ is the maximum distance $D_{\max}$ from a point on the theoretical movable tooth surface to the axis of the theoretical movable tooth surface, so

$$r = R\sin(\pi / Z_b)$$

In the equation, R denotes the radius of the meshing curve; and $Z_b$ denotes the number of the movable teeth.

The parameters in Embodiment 3 and Embodiment 4 are shown in Table 2.

Table 2 Theoretical structural parameters

| Name and Unit | Value |
| --- | --- |
| Number of movable teeth, $Z_b$ | 16 |
| Wave number of combined tooth surface race, $Z_c$ | Hypocycloid: 17; epicycloid: 15 |
| Radius of meshing curve (radius of distribution circle of movable tooth slot), $R$ (mm) | 28.2 |
| Eccentric distance between movable gear and cycloidal gear, $A$ (mm) | 1.2 |
| Radius of steel ball movable tooth, $r$ (mm) | 5.501 |

As shown in FIG. 30, in Embodiment 3 and Embodiment 4, the movable tooth slots on the movable gear are composed of contact slot surfaces and non-contact slot surfaces that have the same number as the movable teeth and are circumferentially evenly distributed. All the contact slot surfaces are completely fit with the surfaces of the movable teeth, and all the non-contact slot surfaces are not in contact with the surfaces of the movable teeth.

The transmission principles of the Embodiment 3 and Embodiment 4 are as follows. When the cycloidal gear is fixed, the axis of the movable gear is driven to revolve around the axis of the cycloidal gear. All the movable teeth meshing with the movable tooth slots on the movable gear mesh with the combined tooth surface race on the cycloidal gear at the same time. That is, all the movable teeth must move in the combined tooth surface race on the cycloidal gear, so as to react to the movable gear through the movable tooth slots to push the movable gear to rotate around its own axis. Each time when the axis of the movable gear revolves around the axis of the cycloidal gear for one circle, the movable gear is driven by the movable teeth to rotate around its own axis by a wave number of the combined tooth surface race, thereby realizing variable speed motion. When the movable gear is fixed, the axis of the cycloidal gear is driven to revolve around the axis of the movable gear. All the movable teeth meshing with the combined tooth surface race on the cycloidal gear mesh with the contact slot surfaces on the movable gear at the same time. That is, all the movable teeth must move on the contact slot surfaces on the movable gear, so as to react to the cycloidal gear through the combined tooth surface race to push the cycloidal gear to rotate around its own axis. Each time when the axis of the cycloidal gear revolves around the axis of the movable gear for one circle, the cycloidal gear is driven by the movable teeth to rotate around its own axis for the distance between two adjacent contact slot surfaces, thereby realizing variable speed motion.

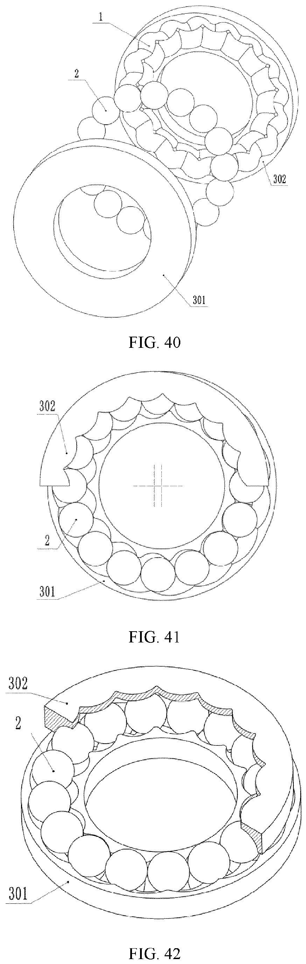

FIGS. 39 to 42 illustrate a two-tooth-difference closely-packed cycloidal movable tooth transmission unit with a combined tooth surface according to Embodiment 5 of the present invention. In this embodiment, the movable tooth is a standard ball, and its radius $r$ is the maximum distance $D_{max}$ from a point on the theoretical movable tooth surface to the axis of the theoretical movable tooth surface, so

$$r = R\sin(\pi / Z_b)$$

In the equation, $R$ denotes the radius of the meshing curve; and $Z_b$ denotes the number of the movable teeth.

The meshing curve equations of the combined tooth surface race on the epicycloidal gear are:

$$\begin{cases} x = 28.2\cos\varphi - 1.2\cos[(1+15)\varphi] \\ y = 28.2\sin\varphi - 1.2\sin[(1+15)\varphi] \end{cases} \quad \varphi \in [0, 2\pi)$$

The meshing curve equations of the combined tooth surface race on the hypocycloidal gear are:

$$\begin{cases} x = 28.2\cos\varphi + 1.2\cos[(1-17)\varphi] \\ y = 28.2\sin\varphi + 1.2\sin[(1-17)\varphi] \end{cases} \quad \varphi \in [0, 2\pi)$$

In the above two equations, the units of $x$ and $y$ are mm.

The parameters in Embodiment 5 are shown in Table 3.

Table 3 Theoretical structural parameters

| Name and Unit | Value |
|---|---|
| Number of movable teeth, $Z_b$ | 16 |
| Wave number of combined tooth surface race, $Z_c$ | Hypocycloid: 17; epicycloid: 15 |
| Radius of meshing curve (radius of distribution circle of movable tooth slot), $R$ (mm) | 28.2 |
| Eccentric distance of epicycloidal gear and hypocycloidal gear, $A$ (mm) | 2.4 |
| Radius of movable tooth, $r$ (mm) | 5.501 |

In Table 3, the radii of the movable teeth are approximate. In actual processing, the diameter of the movable tooth cannot be processed to an accurate theoretical value, but it can meet the needs of engineering applications. When machining tolerances are formulated, negative tolerances are usually selected on the basis of theoretical values.

The transmission principle of Embodiment 5 is as follows. Of the epicycloidal gear and the hypocycloidal gear, one gear is fixed, and the axis of the other gear is driven to revolve along the axis of the fixed gear, thereby realizing variable speed motion. Specifically, when the epicycloidal gear is fixed, the axis of the hypocycloidal gear is driven to revolve around the axis of the epicycloidal gear. The hypocycloidal gear pushes all the movable teeth in the combined tooth surface race thereof to move in the combined tooth surface race of the epicycloidal gear. Since the combined tooth surface race of the epicycloidal gear is fixed with the epicycloidal gear, the combined tooth surface race of the epicycloidal gear forces all the movable teeth to react to the combined tooth surface race of the hypocycloidal gear. In this way, through the combined tooth surface race of the hypocycloidal gear, the hypocycloidal gear is pushed to rotate around its own axis, thereby realizing variable speed motion. When the hypocycloidal gear is fixed, the axis of the epicycloidal gear is driven to revolve around the axis of the hypocycloidal gear. The epicycloidal gear pushes all the movable teeth in the combined tooth surface race thereof to move in the combined tooth surface race of the hypocycloidal gear. Since the combined tooth surface race of the hypocycloidal gear is fixed with the hypocycloidal gear, the combined tooth surface race of the hypocycloidal gear forces all the movable teeth to react to the combined tooth surface race of the epicycloidal gear. In this way, through the combined tooth surface race of the epicycloidal gear, the epicycloidal gear is pushed to rotate around its own axis, thereby realizing variable speed motion.

All the movable teeth are densely arranged, that is, every two adjacent movable teeth are in contact with each other. Therefore, during the transmission process, the movable teeth will not displace or cause the transmission to be stuck. The design perfectly solves the problems of displacement and sticking of the movable teeth of the traditional two-tooth-difference cycloidal movable tooth transmission mechanism in which the race is not undercut and there is a large gap between the movable teeth. Compared with the traditional mechanism, the movable teeth of the two-tooth-difference closely-packed cycloidal movable tooth transmission unit with a combined tooth surface are in contact with each other in sequence, which is convenient for assembly and avoids the need to consider the position of the movable teeth. It is necessary to precisely arrange all the movable teeth in the traditional mechanism, such that they are evenly distributed in one race so as to be assembled in the other race, which is not convenient for the assembly of the prototype in the actual production process.

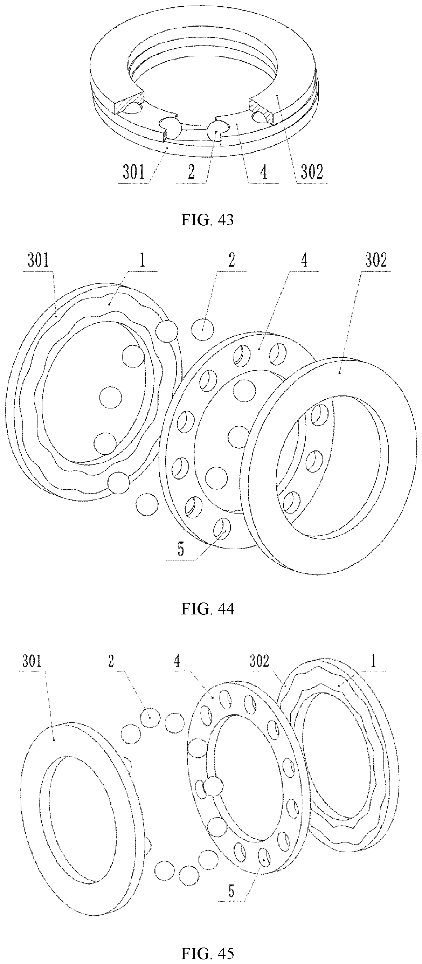

FIGS. 43 to 45 illustrate a double-output two-tooth-difference cycloidal movable tooth transmission unit with a combined tooth surface according to Embodiment 6 of the present invention. In this embodiment, the combined tooth surface race is on a flat surface of the epicycloidal gear and the hypocycloidal gear. The movable gear is a disc-shaped part. This structure enables all the movable teeth to mesh and transmit power during the transmission process but occupies a large radial space during application.

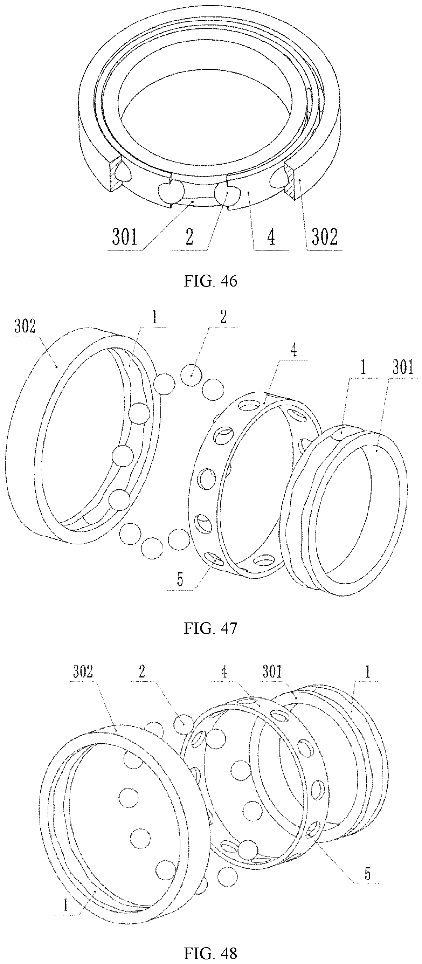

FIGS. 46 to 48 illustrate a double-output two-tooth-difference cycloidal movable tooth transmission unit with a combined tooth surface according to Embodiment 7 of the present invention. In this embodiment, the combined tooth surface race is on a cylindrical surface of the epicycloidal gear and the hypocycloidal gear. The movable gear is a ring-shaped part. This structure greatly saves the radial space in application, but only about half of the movable teeth transmit power at the same time during transmission.

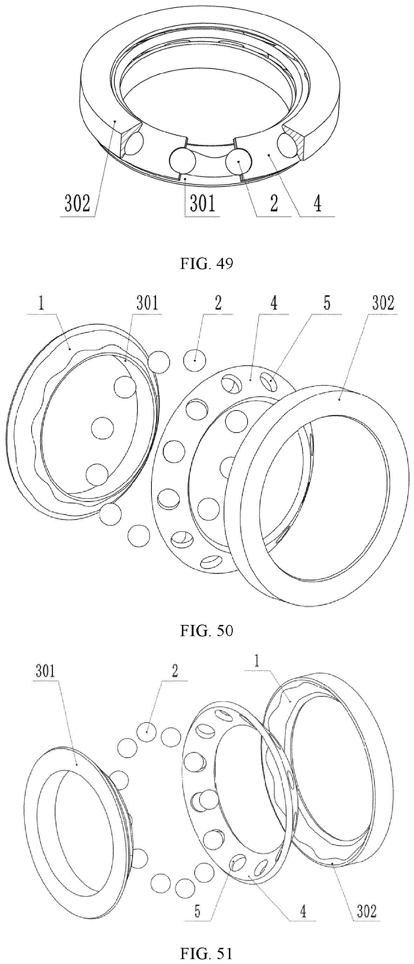

FIGS. 49 to 51 illustrate a double-output two-tooth-difference cycloidal movable tooth transmission unit with a combined tooth surface according to Embodiment 8 of the present invention. In this embodiment, the combined tooth surface race is on a conical surface of the epicycloidal gear and the hypocycloidal gear. The movable gear is a conical part. This structure avoids the problem of space occupation in Embodiment 6 and Embodiment 7 and enables all the movable teeth to transmit power at the same time during transmission, but the processing technology of the movable gear is relatively complicated.

Embodiment 6, Embodiment 7, and Embodiment 8 provide horizontal comparisons of even dimensions, and all use the same race parameters and the same number of movable teeth.

The transmission principles of Embodiment 6, Embodiment 7 and Embodiment 8 are as follows. In the double-output two-tooth-difference cycloidal movable tooth transmission unit with a combined tooth surface, in addition to the movable teeth, there are only three transmission parts, namely the epicycloidal gear, the movable gear, and the hypocycloidal gear. Among the three transmission parts, one is fixed, and the axes of the other two transmission parts are driven to revolve around the axis of the fixed part. The meshing elements include the combined tooth surface race and the movable tooth slots on the epicycloidal gear, and the combined tooth surface race on the hypocycloidal gear. Under the interaction between the movable teeth and the meshing elements, the fixed part reacts to the two moving parts, driving them to rotate around their own axis, thereby realizing variable speed rotation. For example, if the epicycloidal gear is fixed, the axis of the hypocycloidal gear and the axis of the movable gear are driven to revolve around the axis of the epicycloidal gear at the same speed and in the same direction. Under the interaction between the movable teeth and the meshing elements, each time when the axis of the hypocycloidal gear revolves around the axis of the epicycloidal gear for one circle, the hypocycloidal gear rotates around its own axis for two waves of the combined tooth surface races on the hypocycloidal gears. Each time when the axis of the movable gear revolves around the axis of the epicycloidal gear for one circle, movable gear rotates around its own axis for one movable tooth. In this way, two variable speed motions are completed respectively. The two variable speed motions can be directly output separately or can be directly connected to the two-degree-of-freedom differential gear train as two inputs into the two-degree-of-freedom differential gear train. They can also serve as inputs into other transmission mechanisms. In short, the application scenarios are flexible and changeable.

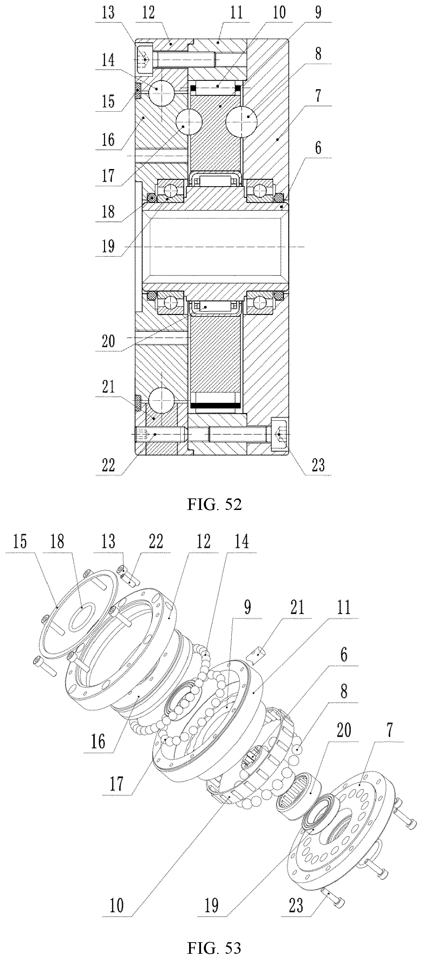

FIGS. 52 to 54 illustrate a mechanically-balanced reducer using a cycloidal movable tooth transmission with a combined tooth surface race according to Embodiment 9 of the present invention, which is an application example of the cycloidal movable tooth transmission mechanism with a combined tooth surface in the reducer. The reducer has a two-stage transmission structure, and each stage is a single-stage cycloidal movable tooth transmission unit with a combined tooth surface. The two single-stage cycloidal movable tooth transmission units with a combined tooth surface are connected in parallel. The transmission structure is symbolized by different letters. For example, "S" denotes the combined tooth surface cycloid race, and the symbol "O" denotes the movable tooth slots. S and O are connected together to form a movable tooth meshing pair, which together with the movable teeth form the single-stage cycloidal movable tooth transmission unit with a combined tooth surface.

In Embodiment 9, the meshing curve equations of the i-stage transmission mechanism are:

$$\begin{cases} x = R_i \cos\varphi + A\cos[(1-Z_{ci})\varphi] \\ y = R_i \sin\varphi + A\sin[(1-Z_{ci})\varphi] \end{cases} \qquad \varphi \in [0, 2\pi), i = 1 \text{ or } 2$$

or

$$\begin{cases} x = R_i \cos\varphi - A\cos[(1+Z_{ci})\varphi] \\ y = R_i \sin\varphi - A\sin[(1+Z_{ci})\varphi] \end{cases} \qquad \varphi \in [0, 2\pi), i = 1 \text{ or } 2$$

In the above equations, A denotes the eccentric distance between first transition wheel 9 and first fixed wheel 7, that is, the distance between an axis of the first transition wheel 9 and an axis of the first fixed wheel 7; $R_1$ denotes a radius of a distribution circle of first movable tooth 8; $Z_{c1}$ denotes a wave number of a race where the first movable tooth 8 is located; $R_2$ denotes a radius of a distribution circle of a second movable tooth 17; and $Z_{c2}$ denotes a wave number of a race where the second movable tooth 17 is located.

In Embodiment 9, first end cover 12 and the first fixed wheel 7 are respectively fixedly provided on two sides of first housing 11. First output wheel 16 is hinged to the first end cover 12. A circle of closely-packed steel balls 14 are circumferentially evenly distributed and are spherically tangent to each other between the first end cover 12 and the first output wheel 16. Two ends of first input shaft 6 are respectively hinged to the first fixed wheel 7 and the first output wheel 16 through a first bearing 19. A center of the first input shaft 6 is hinged to second bearing 20. The first transition wheel 9 is hinged to the second bearing 20. Mechanical balance rolling element 10 is provided in an eccentric annular space between the first transition wheel 9 and the first housing 11. The mechanical balance rolling element 10 is in contact fit with an outer wall of the first transition wheel 9 and an inner wall of the first housing 11, respectively. A circle and positive integer number of first movable teeth 8 are circumferentially evenly distributed and mesh between the first transition wheel 9 and the first fixed wheel 7. A circle and positive integer number of second movable teeth 17 are circumferentially evenly distributed and mesh between the first transition wheel 9 and the first output wheel 16. Further, the first end cover 12 is fixedly provided on one side of the first housing 11 through a positive integer number of circumferentially evenly distributed second screws 23. The first fixing wheel 7 is fixedly provided on the other side of the first housing 11 through a positive integer number of circumferentially evenly distributed second screws 23. First plug 21 is fixedly provided on the first end cover 12 through first set screw 22. First sealing washer 15 is fixedly provided on the first end cover 12 and seals a gap between the first end cover 12 and the first output wheel 16. First sealing ring 18 is provided in a space among the first input shaft 6, the first bearing 19 and the first output wheel 16. Another first sealing ring 18 is provided in a space among the first input shaft 6, the first bearing 19 and the first fixed wheel 7. Further, a plug hole and a positioning hole are provided in the first end cover 12 to mount the first plug 21 and the first set screw 22. Contact fit surfaces of the first end cover 12 and the first plug 21 with all the closely-packed steel balls 14 form race surfaces of a first closely-packed race. Further, the first output wheel 16 is provided with a second closely-packed race and a fourth movable tooth meshing pair. The second closely-packed race is configured to fit with the closely-packed steel balls 14. The fourth movable tooth meshing pair is a movable tooth slot or a movable tooth race, which is configured to mesh with the second movable tooth 17. A second movable tooth meshing pair and a third movable tooth meshing pair are respectively provided on two sides of the first transition wheel 9. The second movable tooth meshing pair is a movable tooth slot or a movable tooth race, which is configured to mesh with the first movable teeth 8. The third movable tooth meshing pair is a movable tooth slot or a movable tooth race, which is configured to mesh with the second movable teeth 17. The first fixed wheel 7 is provided with a first movable tooth meshing pair. The first movable tooth meshing pair is a movable tooth slot or a movable tooth race, which is configured to mesh with the first movable teeth 8. The first movable tooth meshing pair and the second movable tooth meshing pair that mesh with all the first movable teeth 8 must include both the movable tooth slot and the movable tooth race. The third movable tooth meshing pair and the fourth movable tooth meshing pair that mesh with all the second movable teeth 17 must include both the movable tooth slot and the movable tooth race. Further, the first input shaft 6 includes a first shaft segment, an eccentric shaft segment, a second shaft segment, and an internal spline. The first shaft segment and the second shaft segment are coaxial and are configured to hinge the first bearing 19. The eccentric shaft segment is configured to hinge second bearing 28. The internal spline is configured to connect a drive device to the outside. Further, the mechanical balance rolling element 10 is composed of a cage and a positive integer number of rollers with different diameters. The rollers are provided in roller slots of the cage. All the rollers are in contact fit with the outer wall of the first transition wheel 9 and the inner wall of the first housing 11. All the rollers can be evenly or unevenly circumferentially distributed. Different rollers can be of the same material or of different materials. However, the center of gravity of the overall structure of the mechanical balance rolling element 10 composed of all the rollers and the cage, the first transition wheel 9, the second bearing 20, and the first input shaft 6 must be located on the center axis of the reducer.

In Embodiment 9, according to the arrangement form of the meshing pairs, there are four transmission forms, namely "SOSO", "SOOS", "OSSO", and "OSOS". The transmission forms each include four structures, that is, hypocycloidal gear (first-stage) + hypocycloidal gear (second-stage), epicycloidal gear (first-stage) + epicycloidal gear (second-stage), hypocycloidal gear (first-stage) + epicycloidal gear (second-stage), and epicycloidal gear (first-stage) + hypocycloidal gear (second-stage). Therefore, there are a total of sixteen transmission structures.

In Embodiment 9, the OSSO form is adopted, which use hypocycloidal gears for both stages, with all the movable teeth being standard balls of the same size. The transmission parameters are shown in Table 4:

Table 4 Theoretical structural parameters

| Name and Unit | Value |
|---|---|
| Number of first movable teeth, $Z_{b1}$ | 17 |
| Number of second movable teeth, $Z_{b2}$ | 21 |
| Wave number of first-stage cycloid race, $Z_{c1}$ | 18 |
| Wave number of second-stage cycloid race, $Z_{c2}$ | 22 |
| Radius of distribution circle of first-stage movable tooth slot, $R_1$ (mm) | 24 |
| Radius of distribution circle of second-stage movable tooth slot, $R_2$ (mm) | 24 |
| Eccentric distance between first transition wheel and first fixed wheel, A (mm) | 0.6 |
| Radius of first movable tooth, $r_1$ (mm) | 3 |
| Radius of second movable tooth, $r_2$ (mm) | 2.5 |

In Embodiment 9, the mechanical balance rolling element 10 is composed of the cage and twelve types of rollers (the first to the twelfth rollers) with the same length but different diameters. The materials of the cage and all the rollers are of the same density as the materials of the first input shaft 6 and the first transition wheel 9. There is one first roller, and the second to twelfth rollers each are totaled two and are distributed symmetrically with respect to a radial line of the first roller. The specifications of the rollers are shown in Table 5:

Table 5 Specifications of rollers

| SN | Name | Diameter/mm | Length/mm |
|---|---|---|---|
| 1 | First roller | 2.9 | |
| 2 | Second roller | 2.93 | |
| 3 | Third roller | 3.03 | |
| 4 | Fourth roller | 3.19 | |
| 5 | Fifth roller | 3.37 | |
| 6 | Sixth roller | 3.58 | 7.5 |
| 7 | Seventh roller | 3.77 | |
| 8 | Eighth roller | 3.86 | |
| 9 | Ninth roller | 3.93 | |
| 10 | Tenth roller | 4.04 | |
| 11 | Eleventh roller | 4.08 | |
| 12 | Twelfth roller | 4.09 | |

The working principle of Embodiment 9 is as follows. According to the arrangement form of the meshing pairs, there are four transmission forms, namely "SOSO", "SOOS", "OSSO", and "OSOS". SOSO is reversed to OSOS, OSOS is reversed to SOSO, and SOOS and OSSO remain unchanged after being reversed. Therefore, the situation in which the first fixed wheel 7 is fixed can cover all situations to describe the transmission principle and the calculation equation of the reduction ratio.

When the first fixed wheel 7 is fixed, the first input shaft 6 is driven, such that the axis of the first transition wheel 9 revolves around the axis of the first input shaft 6. The circumferentially evenly distributed first movable teeth 8 mesh both with the first movable tooth meshing pair of the first fixed wheel 7 and the second movable tooth meshing pair of the first transition wheel 9. The first movable tooth meshing pair of the first fixed wheel 7 is fixedly connected with the first fixed wheel 7. Thus, while meshing with the first movable tooth meshing pair of the first fixed wheel 7, the first movable teeth 8 push the first transition wheel 9 to rotate around its own axis through the second movable tooth meshing pair of the first transition wheel 9. The motion of the first transition wheel 9 is revolution around the axis of the first input shaft 6 and rotation around its own axis. When the first transition wheel 9 moves with the above-mentioned regularity, the third movable tooth meshing pair on the first transition wheel pushes the second movable teeth 17, and then push the fourth movable teeth meshing pair on the first output wheel 16 meshing with the second movable teeth. In this way, the first output wheel 16 is pushed to rotate along its own axis. Since the first output wheel 16 is coaxial with the first input shaft 6, the motion is input through the first input shaft 6, and finally decelerated and output by the first output wheel 16.

The first transition wheel 9 is located on the eccentric shaft segment of the first input shaft 6. If there is no mechanical balance rolling element 10, when the first input shaft 6 rotates at a high speed and drives the first transition wheel 9 to revolve and rotate, great vibration will occur. This will greatly affect the life of the whole machine and the performance of the equipment using the reducer. The conventional technical means to solve this problem is to balance the weight of the first input shaft 6 or the first transition wheel 9 and achieve the purpose of mechanical balance by locally increasing or reducing the weight. This increases the difficulty of design and manufacture to a certain extent. To this end, Embodiment 9 adopts the mechanical balance rolling element 10. The mechanical balance rolling element, the first input shaft 6, the first transition wheel 9 and the second bearing 20 form an organic whole with mechanical balance performance, which greatly improves the use performance and reduces the difficulty of processing and manufacturing. In addition, the mechanical balance rolling element 10 plays the role of the eccentric roller bearing, and organically links the various transmission components of the reducer together, improving the overall performance. Since the first transition wheel 9 cannot swing slightly in the normal axial plane, the bearing at the output end can be in the form of a single-row deep groove ball bearing. The first output wheel 16 achieves the same technical effect as the crossed roller bearing through the closely-packed steel balls 14 and the second movable teeth 17.

The calculation equations for the reduction ratio of the four transmission forms are as follows:

SOSO:

$$i = \frac{Z_{b1}Z_{b2}}{Z_{b1}Z_{b2} - Z_{c1}Z_{c2}}$$

SOOS:

$$i = \frac{Z_{b1}Z_{c2}}{Z_{b1}Z_{c2} - Z_{b2}Z_{c1}}$$

OSSO:

$$i = \frac{Z_{b2}Z_{c1}}{Z_{b2}Z_{c1} - Z_{b1}Z_{c2}}$$

OSOS:

$$i = \frac{Z_{c1}Z_{c2}}{Z_{c1}Z_{c2} - Z_{b1}Z_{b2}}$$

In Embodiment 9, the reduction ratio is calculated as 94.5 by bringing the parameters into the OSSO reduction ratio calculation equation. That is, when the first fixed wheel 7 is fixed and the first input shaft 6 inputs, the first output wheel 7 makes one rotation for every 94.5 rotations of the first input shaft 6.

The reducer of Embodiment 9 can be mounted and used in various ways. The first input shaft 6, the first fixed wheel 7 and the first output wheel 16 are arbitrarily selected as a fixed part, an input part, and an output part. In particular, when the first input shaft 6 is selected as the output part, the reduction ratio is less than 1. It serves as a speed-increasing device, and it does not have a deceleration effect.

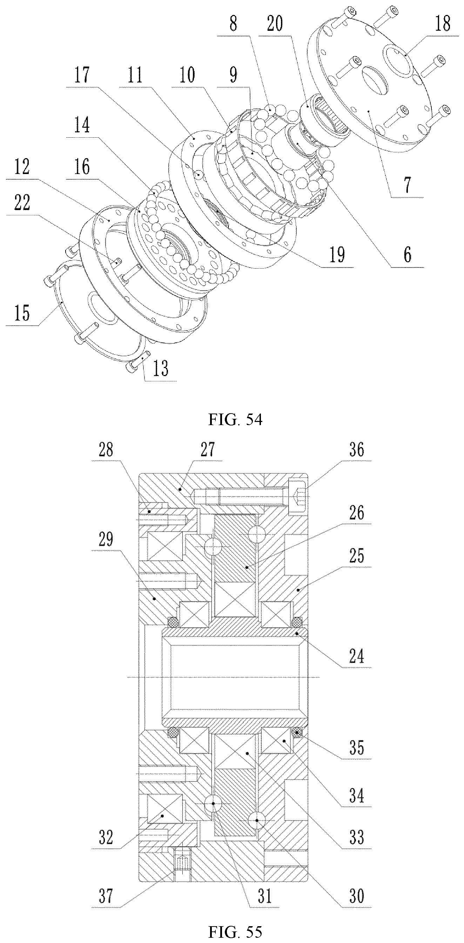

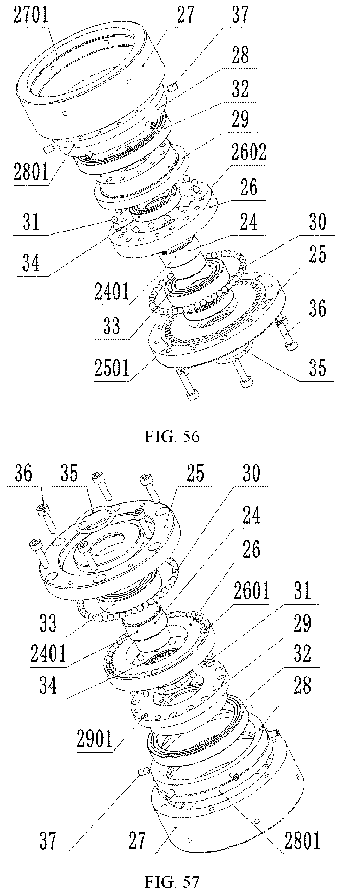

FIGS. 55 to 60 illustrate a lightweight cycloidal movable tooth reducer according to Embodiment 10 and Embodiment 11, which are two application examples of the single-stage cycloidal movable tooth transmission unit with a combined tooth surface. The lightweight cycloidal movable tooth reducer includes second input shaft 24, second fixed wheel 25, second transmission wheel 26, second housing 27, second end cover 28, second output wheel 29, third movable teeth 30, first constant-speed teeth 31, a cycloid reduction pair, a constant-speed output pair, third bearing 32, fourth bearing 33, and fifth bearing 34. The second fixed wheel 25 is fixedly provided on the second housing 27 through third screw 36. The second output wheel 29 is hinged to the second housing 27. Two ends of the second input shaft 24 are hinged to the second fixed wheel 25 and the second output wheel 29 respectively. An eccentric shaft segment 2401 is provided at a center of the second input shaft 24. The second transmission wheel 26 is hinged to the eccentric shaft segment 2401. The fourth bearing 33 is provided between the second transmission wheel 26 and the second input shaft 24. The fifth bearing 34 is provided between the second output wheel 29 and the second input shaft 24. The second end cover 28 has an outer thread pair 2801 and is provided on the second housing 27 or the second fixed wheel 25 through the outer thread pair 2801. When the second end cover 28 is provided on the second housing 27, the second housing 27 has an inner thread pair 2701 fitted with the outer thread pair 2801 on the second end cover 28. The second fixed wheel 25 is an integral separate part. The third bearing 32 is provided between the second end cover 28 and the second output wheel 29, and the fifth bearing 34 is provided between the second input shaft 24 and the second fixed wheel 25. When the second end cover 28 is provided on the second fixed wheel 25, the second fixed wheel 25 is composed of two split parts, namely first split wheel 25 a and second split wheel 25b. The first split wheel 25a has a hole fitted with the second end cover 28. The second split wheel 25b has an inner thread pair 25b1 fitted with the outer thread pair 2801 on the second end cover 28. The third bearing 32 is provided between the second housing 27 and the second output wheel 29, and the fifth bearing 34 is provided between the second input shaft 24 and the second end cover 28. The first split wheel 25a is provided with an orientation boss 25a1, and the second split wheel 25b is provided with an orientation recess 25b2. The orientation boss 25a1 and the orientation recess 25b2 have the same shape and are fitted with each other. The cycloid reduction pair or the constant-speed output pair is provided between the second transmission wheel 26 and the second fixed wheel 25 or the first split wheel 25a. When the cycloid reduction pair is provided between the second transmission wheel 26 and the second fixed wheel 25 or the first split wheel 25a, the constant-speed output pair is provided between the second transmission wheel 26 and the second output wheel 29. When the constant-speed output pair is provided between the second transmission wheel 26 and the second fixed wheel 25 or the first split wheel 25a, the cycloid reduction pair is provided between the second transmission wheel 26 and the second output wheel 29. The cycloid reduction pair is provided with multiple circumferentially evenly distributed third movable teeth 30. The constant-speed output pair is provided with multiple circumferentially evenly distributed first constant-speed teeth 31. First meshing pair 2501 is provided on an end surface of the second fixed wheel 25 or the first split wheel 25a facing the second transmission wheel 26. Second meshing pair 2601 is provided on an end surface of the second transmission wheel 26 facing the second fixed wheel 25 or the first split wheel 25a. Third meshing pair 2602 is provided on an end surface of the second transmission wheel 26 facing the second output wheel 29. Fourth meshing pair 2901 is provided on an end surface of the second output wheel 29 facing the second transmission wheel 26. When the first meshing pair 2501 and the second meshing pair 2601 mesh with the third movable teeth 30, the first meshing pair, the second meshing pair and the third movable teeth form the third movable tooth meshing pair. In this case, the first meshing pair 2501 is a movable tooth slot or a combined tooth surface race, and the second meshing pair 2601 is a movable tooth slot or a combined tooth surface race and is different from the first meshing pair 2501. When the first meshing pair 2501 and the second meshing pair 2601 mesh with the first constant-speed teeth 31, the first meshing pair, the second meshing pair and the first constant-speed teeth form a constant-speed output pair. In this case, the first meshing pair 2501 is a first constant-speed tooth slot or a constant-speed output race, and the second meshing pair 2601 is a first constant-speed tooth slot or a constant-speed output race and is different from the first meshing pair 2501. When the third meshing pair 2602 and the fourth meshing pair 2901 mesh with the third movable teeth 30, the third meshing pair, the fourth meshing pair and the third movable teeth form the third movable tooth meshing pair. In this case, the third meshing pair 2602 is a movable tooth slot or a combined tooth surface race, and the fourth meshing pair 2901 is a movable tooth slot or a combined tooth surface race and is different from the third meshing pair 2602. When the third meshing pair 2602 and the fourth meshing pair 2901 mesh with the first constant-speed teeth 31, the third meshing pair, the fourth meshing pair and the first constant-speed teeth form the constant-speed output pair. In this case, the third meshing pair 2602 is a first constant-speed tooth slot or a constant-speed output race, and the fourth meshing pair 2901 is a first constant-speed tooth slot or a constant-speed output race and is different from the third meshing pair. The surface of the third movable tooth 30 or the first constant-speed tooth 31 is an entire closed curved surface formed by a bounded continuous curve rotating once around an axis that does not pass through the curve. The surface of the movable tooth slot is completely fit with the surface of the third movable tooth 30 or is tangent to the surface of the third movable tooth 30. The surface of the first constant-speed tooth slot is completely fit with the surface of the first constant-speed tooth 31 or is tangent to the surface of the first constant-speed tooth 31. The surface of the constant-speed output race is annular and is always tangent to the surface of the first constant-speed tooth 31. The race surface of the combined tooth surface race is always tangent to all the third movable teeth 30 or only not tangent to one of the third movable teeth 30. The tooth surface of the combined tooth surface race is a combined tooth surface. The number of the movable tooth slots is the same as that of the third movable teeth 30. The number of the first constant-speed tooth slots is the same as that of the first constant-speed teeth 31. The number of the constant-speed output races is the same as that of the first constant-speed teeth 31. The number of the combined tooth surface races and the number of the third movable teeth 30 differs by one. The motion track of the axis of the first constant-speed tooth in the constant-speed output race is a cylindrical surface whose radius is the eccentric distance of the eccentric shaft segment 2401. The difference between the radial minimum value point and the radial maximum value point of the race center line of the combined tooth surface race (i.e., the motion trajectory line of the center of the third movable tooth) is twice the eccentric distance of the eccentric shaft segment 2401. The cross-sectional shape of the orientation boss or the orientation recess is a continuous closed non-circular curve. It can be a regular polygon with rounded corners between every two sides. It can also be a smooth continuous closed curve with more than two symmetrical bands, such as an ellipse, or a zigzag-shaped piecewise continuous closed curve.

FIGS. 55 to 57 illustrate Embodiment 10 of the present invention. In this embodiment, the second end cover 28 is fitted with the second housing 27. The solution has a small aspect ratio. However, the second end cover 28 carries a part of the torque from the second output wheel 29 through the third bearing 32, which slightly interferes with the fit of the inner and outer thread pairs between the second housing 27 and the second end cover 28. Over time, the contact between the second set screw 37 and the second end cover 28 will become unreliable. That is, the pressing force of the second set screw 37 on the second end cover 28 will decrease or even disappear, so it is necessary to pre-tighten the second set screw 37 periodically.

In Embodiment 10, the second transmission wheel 26 and the second fixed wheel 25 form the cycloid reduction pair, and the second transmission wheel 26 and the second output wheel 29 form the constant-speed output pair. All the third movable teeth 30 and the first constant-speed teeth 31 adopt standard balls.

Further, second sealing washer 35 is provided at each end of the second input shaft 24. When the second end cover 28 is fitted with the second housing 27 or the second split wheel 25b, the second housing 27 or the second split wheel 25b is provided with a circle of evenly distributed second set screws 37. Each of the second set screws 37 is in contact fit with the second end cover 28. All parts or bearings except the second sealing washer 35 are made of alloy, carbon fiber, engineering plastics, industrial ceramics or organic glass, and different parts or bearings can be made of different materials.

Further, the first meshing pair 2501 on the second fixed wheel 25 is composed of 50 circumferentially evenly distributed movable tooth slots. The second meshing pair 2601 on the second transmission wheel 26 is a combined tooth surface epicycloid race with a race wave number of 49. The third meshing pair 2602 on the second transmission wheel 26 is composed of 16 circumferentially evenly distributed first constant-speed tooth slots. The fourth meshing pair 2901 on the second output wheel 29 is composed of 16 circumferentially evenly distributed constant-speed output races.

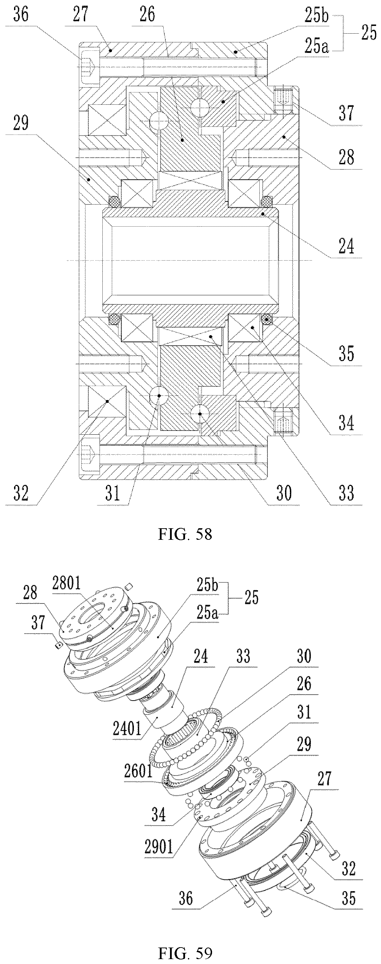

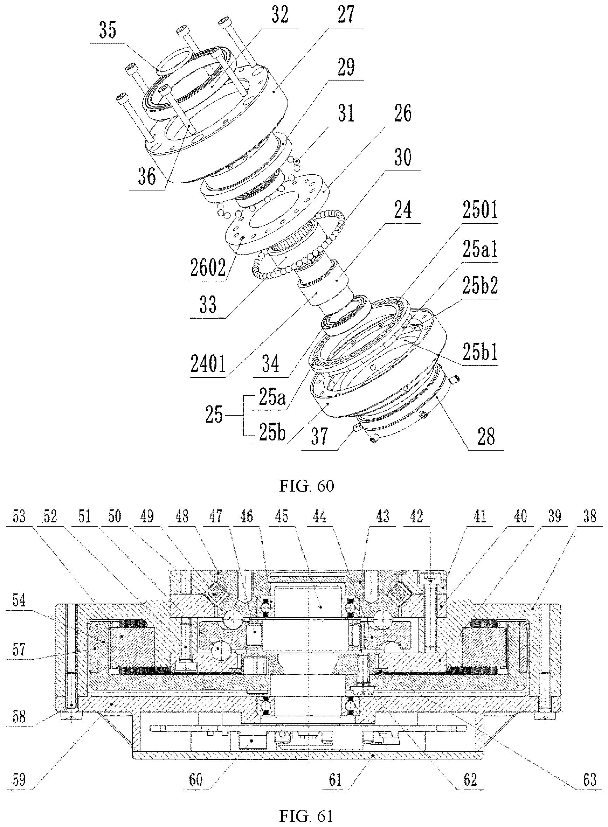

FIGS. 58 to 60 illustrate Embodiment 11 of the present invention. In this embodiment, the second end cover 28 is fitted with the second fixed wheel 25. In the solution, the second fixed wheel 25 is composed of the first split wheel 25a and the second split wheel 25b. The second end cover 28 is provided on the inner thread pair 25b1 of the second split wheel 25b through the outer thread pair 2801. As shown in FIG. 60, the orientation boss 25a1 on the first split wheel 25a and the orientation recess 25b2 on the second split wheel 25b have a regular octagonal cross-section with rounded corners between each two sides. The second end cover 28 is in contact fit with the first split wheel 25a. The depth at which the orientation boss 25a1 is inserted into the orientation recess 25b2 can be adjusted through the inner and outer thread pairs. Since the second end cover 28 is provided on the second split wheel 25b, the second end cover 28 does not bear the torque during the transmission process. This part of the torque is transmitted from the orientation boss 25a1 to the orientation recess 25b2, and it is not necessary to periodically pre-tighten the second set screw 37 on the second split wheel 25b. However, the length and diameter of such structure are larger than those in Embodiment 10.

Embodiment 11 adopts the same transmission structure and parameters as Embodiment 10. The first meshing pair 2501 is provided on the first split wheel 25a of the second fixed wheel 25. The inner thread pair 25b1 is provided on the second split wheel 25b of the second fixed wheel 25. It has the same technical effect as the inner thread pair 2701 in Embodiment 10 and is also configured to mount the outer thread pair 2801 on the second end cover 28. In particular, the third bearing 32, the fourth bearing 33 and the fifth bearing 34 can adopt conventional bearings with inner and outer rings. In addition, they can retain only the rolling element, and directly use the parts fitted with the rolling element as the inner and outer rings. For example, in Embodiment 10, the third bearing 32, the fourth bearing 33 and the fifth bearing 34 all adopt deep groove ball bearings. In Embodiment 11, the third bearing 32 adopts a crossed roller bearing, the fourth bearing 33 adopts a needle roller bearing without an inner ring, and the fifth bearing 34 adopts a deep groove ball bearing. Further, in Embodiment 10, the third bearing 32 only retains the rolling element of the crossed roller bearing. The second end cover 28 serves as the outer ring of the crossed roller bearing, and the second output wheel 29 serves as the inner ring of the crossed roller bearing. The second end cover 28, the second output wheel 29 and the third bearing 32 together form the crossed roller bearing. This technical means can also be applied to Embodiment 11. That is, the crossed roller bearing is formed by the second housing 27, the second output wheel 29 and the third bearing 32. In addition, in Embodiment 10 and Embodiment 11, the fourth bearing 33 and the fifth bearing 34 can only retain the rolling element, that is, the cylindrical roller rolling element is composed of the cylindrical rollers and the cages.

In particular, the second sealing washer 35 is usually made of rubber. In this embodiment, in addition to alloy materials, all other parts of the reducer can also be made of carbon fiber, engineering plastics, industrial ceramics or organic glass. Different parts can be made of different materials. For example, the fifth bearing 34 in Embodiment 10 or Embodiment 11 may be an all-ceramic zirconia ceramic bearing or a silicon nitride ceramic bearing. Alternatively, the inner and outer rings of the bearing are made of zirconia ceramics, and the balls are made of silicon nitride. Alternatively, the inner and outer rings of the bearing are made of silicon nitride ceramics, and the balls are made of zirconia. The fifth bearing 34 can also be a plastic bearing. The bearing body is all made of engineering plastics, or the balls are made of organic glass. The third movable tooth 30 and the first constant-speed tooth 31 can be made of carbon fiber, engineering plastics, industrial ceramics, or organic glass. The parts fitted with the third movable tooth 30 and the first constant-speed tooth 31 can be made of carbon fiber, engineering plastics, industrial ceramics, or organic glass. When organic glass is used, acrylic can be used. The remaining parts can be made of carbon fiber, engineering plastics, industrial ceramics, or organic glass. The third screw or the second set screw is generally made of an engineering plastic.

Further, in Embodiment 10 or Embodiment 11, except for the second sealing washer 35, other parts and bearings of the reducer can be made of industrial ceramics, such that an all-ceramic reducer can be formed. Due to the characteristics of industrial ceramics, the reducer does not need to the lubricant, and features self-lubrication, insulation, magnetic insulation, and corrosion resistance. Compared with the conventional reducer, the mass of the whole machine is reduced by 25-60%, and it is especially suitable for the vacuum environment, the corrosive environment in the chemical industry and the environment with insulation and magnetic insulation requirements.

Further, in Embodiment 10 or Embodiment 11, except for the second sealing washer 35, other parts and bearings of the reducer can be made of carbon fiber, engineering plastics or organic glass. Specifically, all the bearings, the third screw 36 and the second set screw 37 can be made of plastic, and all the third movable teeth 30 and the first constant-speed teeth 31 can be made of plastics or glass. All other parts can be made of transparent acrylic. In this way, a non-metallic reducer is formed, which features insulation, magnetic insulation, and corrosion resistance. Compared with the conventional reducer, the mass of the whole machine is reduced by 60-90%. Due to the transparent acrylic material, the inner operation of the reducer is visible. The reducer has ornamental value, enables real-time visible inner operation, which facilitates timely troubleshooting, repair, and maintenance.

Further, in Embodiment 10 or Embodiment 11, except for the second sealing washer 35, the bearings, the third movable teeth 30 and the first constant-speed teeth 31 of the reducer can be made of ceramics, and the other parts can be made of alloys.

The working principles of Embodiment 10 and Embodiment 11 are as follows. Among the second input shaft 24, the second fixed wheel 25 and the second output wheel 29, one part is arbitrarily selected as a fixed part, one part is arbitrarily selected as a driven part, and one part is arbitrarily selected as an output part. There are two common modes. In one mode, the second fixed wheel 25 is fixed, the second input shaft 24 is driven, and the second output wheel 29 performs deceleration and output. In the other mode, the second output wheel 29 is fixed, the second input shaft 24 is driven, and the second fixed wheel 25 performs deceleration and output.

For example, in Embodiment 10, the second fixed wheel 25 is fixed, the second input shaft 24 is driven, and the second output wheel 29 performs deceleration and output. When the second input shaft 24 is driven, the eccentric shaft segment 2401 on the second input shaft 24 drives the second transmission wheel 26 and drives the cycloid reduction pair and the constant-speed output pair to work simultaneously. The third movable teeth 30 are restricted in the first meshing pair 2501 of the second fixed wheel 25, that is, in the movable tooth slots. The third movable teeth 30 mesh with the second meshing pair 2601 on the second transmission wheel 26, that is, the combined tooth surface epicycloid race. Therefore, when the second transmission wheel 26 revolves around the axis of the second input shaft 24, the third movable teeth 30 push the second transmission wheel 26 through the second meshing pair 2601 on the second transmission wheel 26, that is, the combined tooth surface epicycloid race, to rotate about the axis of the eccentric shaft segment 2401. The second transmission wheel 26 rotates while revolving, and the motion is transmitted by the constant-speed output pair to the second output wheel 29 for constant-speed output. Specifically, the first constant-speed teeth 31 are restricted in the third meshing pair 2602 on the second transmission wheel 26, that is, in the first constant-speed tooth slots. The first constant-speed tooth 31 meshes with the fourth meshing pair 2901 on the second output wheel 29, that is, the constant-speed output races. Therefore, when the first constant-speed teeth 31 perform periodic cyclic motion in the fourth meshing pair 2901 on the second output wheel 29, that is, the annular constant-speed output races, it drives the second output wheel 29 to perform deceleration and output.

When the second end cover 28 is provided on the inner thread pair 2701 of the second housing 27 through the outer thread pair 2801, the second end cover 28 is rotated. When the second end cover 28 reciprocates in the axial direction of the reducer, the third bearing 32 drives the second output wheel 29 to reciprocate in the axial direction of the reducer to realize close meshing of the third movable teeth 30 and the transmission mechanism where the first constant-speed teeth 31 are located. Further, the position of the second end cover 28 is adjusted. The second end cover 28 is fastened by a circle of circumferentially evenly distributed second set screws 37 to prevent it from spinning and to share a part of the axial force.

When the second end cover 28 is provided on the inner thread pair 25b1 of the second split wheel 25b in the second fixed wheel 25 through the outer thread pair 2801, the second end cover 28 is rotated. When the second end cover 28 reciprocates in the axial direction of the reducer, the fifth bearing 34 drives the second split wheel 25a to reciprocate in the axial direction of the reducer, to realize close meshing of the third movable teeth 30 and the transmission mechanism where the first constant-speed teeth 31 are located. Further, the position of the second end cover 28 is adjusted. The second end cover 28 is fastened by a circle of circumferentially evenly distributed second set screws 37 to share a part of the axial force.

To achieve the lightweight purpose, the reducer needs to have a small aspect ratio and use low-density materials, thereby reducing the overall mass. Due to the particularity of the movable tooth transmission, the material suitable for the bearing is also suitable for the movable tooth reducer. Therefore, in this embodiment, in addition to alloys, carbon fiber, engineering plastics, industrial ceramics or organic glass can also be used for the parts and bearings of the lightweight cycloidal movable tooth reducer.

If the reducer is made of materials other than alloys, its mechanical properties will be inferior to those of alloys, so its bearing capacity is limited, and it is only suitable for low-load and low-impact situations. However, it will have the performance that conventional reducer does not have, such as insulation, magnetic insulation, corrosion resistance or self-lubrication, etc. Therefore, it is suitable for special occasions, such as chemical industry and aerospace.

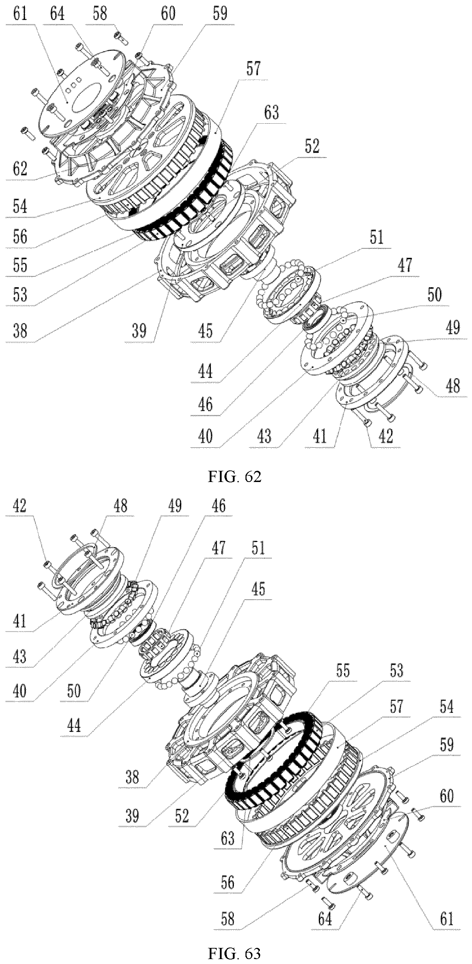

FIGS. 61 to 64 illustrate an integrated flat movable tooth transmission brushless motor according to Embodiment 12 and Embodiment 13, which are two application examples of the single-stage cycloidal movable tooth transmission unit with a combined tooth surface. The integrated flat movable tooth transmission brushless motor includes motor housing 38, third fixed wheel 39, first output bearing ring 40, second output bearing ring 41, fourth screw 42, third output wheel 43, third transmission wheel 44, drive shaft 45, sixth bearing 46, first rolling element 47, third sealing washer 48, second rolling element 49, second constant-speed tooth 50, fourth movable tooth 51, fifth screw 52, stator core 53, rotor frame 54, copper coil 55, permanent magnets 56, yoke sleeve 57, sixth screw 58, first cover 59, servo control module 60, second cover 61, seventh screw 62, fourth sealing washer 63, and eighth screw 64. The third fixed wheel 39 is fixedly provided on the motor housing 38 through the fifth screw 52. The first output bearing ring 40 and the second output bearing ring 41 are fixedly provided on the motor housing 38 through the fourth screw 42, and the first output bearing ring 40 is located between the second output bearing ring 41 and the motor housing 38. The third output wheel 43 is hinged to the second output bearing ring 41. The third sealing washer 48 is fixedly provided on the second output bearing ring 41, and the third sealing washer 48 is in close contact with the third output wheel 43. The second rolling element 49 is provided in a space among the first output bearing ring 40, the second output bearing ring 41 and the third output wheel 43 and is in contact with the three parts. The first cover 59 is fixedly provided on the motor housing 38 through the sixth screw 58. Two ends of the drive shaft 45 are hinged to the first cover 59 and the third output wheel 43 through the sixth bearing 46 respectively. The third transmission wheel 44 is hinged to the drive shaft 45 through the first rolling element 47. The rotor frame 54 is fixedly provided on the drive shaft 45 through the seventh screw 62. The fourth sealing washer 63 is fixedly provided on the third fixed wheel 39 and is in close contact with the drive shaft 45. An even number of circumferentially evenly distributed permanent magnets 56 are fixedly provided on the rotor frame 54. The yoke sleeve 57 is fixedly provided on the rotor frame 54 and wraps all the permanent magnets 56. The stator core 53 is fixedly provided in the motor housing 38 and has a pole number that is an integer multiple of 3. The copper coil 55 is provided on each pole. The second cover 61 is fixedly provided on the first cover 59 through the eighth screw 64. The servo control module 60 is fixedly provided in a space surrounded by the first cover 59 and the second cover 61. A lead wire of the copper coil 55 is connected to the servo control module 60. A cycloid reduction pair or a constant-speed output pair is provided between the third transmission wheel 44 and the third fixed wheel 39. When a cycloid reduction pair is provided between the third transmission wheel 44 and the third fixed wheel 39, a constant-speed output pair is provided between the third transmission wheel 44 and the third output wheel 43. When a constant-speed output pair is provided between the third transmission wheel 44 and the third fixed wheel 39, a cycloid reduction pair is provided between the third transmission wheel 44 and the third output wheel 43. The cycloid reduction pair is provided with multiple circumferentially evenly distributed fourth movable teeth 51. The constant-speed output pair is provided with multiple circumferentially evenly distributed second constant-speed teeth 50.

Further, an end surface of the third fixed wheel 39 facing the third transmission wheel 44 is provided with a first meshing pair. An end face of the third transmission wheel 44 facing the third fixed wheel 39 is provided with a second meshing pair. An end surface of the third transmission wheel 44 facing the third output wheel 43 is provided with a third meshing pair. An end surface of the third output wheel 43 facing the third transmission wheel 44 is provided with a fourth meshing pair. When the first meshing pair and the second meshing pair mesh with the fourth movable teeth, the first meshing pair, the second meshing pair and the fourth movable teeth form the cycloid reduction pair. The first meshing pair is composed of movable tooth slots or cycloid races, and the second meshing pair is composed of movable tooth slots or cycloid races and is different from the first meshing pair. When the first meshing pair and the second meshing pair mesh with the second constant-speed teeth 50, the first meshing pair, the second meshing pair and the second constant-speed teeth form the constant-speed output pair. The first meshing pair is composed of second constant-speed tooth slots or constant-speed output races, and the second meshing pair is composed of second constant-speed tooth slots or constant-speed output races and is different from the first meshing pair. When the third meshing pair and the fourth meshing pair mesh with the fourth movable teeth 51, the third meshing pair, the fourth meshing pair and the fourth movable teeth form the cycloid reduction pair. The third meshing pair is composed of movable tooth slots or cycloid races, and the fourth meshing pair is composed of movable tooth slots or cycloid races and is different from the third meshing pair. When the third meshing pair and the fourth meshing pair mesh with the second constant-speed teeth 50, the third meshing pair, the fourth meshing pair and the second constant-speed teeth form the constant-speed output pair. The third meshing pair is composed of second constant-speed tooth slots or constant-speed output races, and the fourth meshing pair is composed of second constant-speed tooth slots or constant-speed output races and is different from the third meshing pair.

Further, the surface of the fourth movable tooth 51 or the second constant-speed tooth 50 is an entire closed curved surface formed by a bounded continuous curve rotating once around an axis that does not pass through the curve. The number of the movable tooth slots is the same as that of the fourth movable teeth 51. The number of the second constant-speed tooth slots is the same as that of the second constant-speed teeth 50. The number of the constant-speed output races is the same as that of the second constant-speed teeth 50. The number of the cycloid races and the number of the fourth movable tooth 51 differ by one. The surface of the movable tooth slot is completely fit with the surface of the fourth movable tooth 51 or is tangent to the surface of the fourth movable tooth 51. The surface of the second constant-speed tooth slot is completely fit with the surface of the second constant-speed tooth 50 or is tangent to the surface 50 of the second constant-speed tooth. The surface of the constant-speed output race is annular and is always tangent to the surface of the second constant-speed tooth 50. The race surface of the cycloid race is always tangent to all the fourth movable teeth 51 or only not tangent to one of the fourth movable teeth 51. The cycloid race is an undercut tooth surface race or a combined tooth surface race. The tooth surface of the undercut tooth surface race has a unilateral undercut feature, that is, the outer undercut of the epicycloid race or the inner undercut of the hypocycloid race. The combined tooth surface race is formed by splicing different tooth surfaces, and the centerlines of all the tooth surfaces can form a complete, closed epicycloid or hypocycloid. The epicycloid or hypocycloid is the motion curve of the center of the fourth movable tooth 51.

Further, the drive shaft 45 is provided with an eccentric shaft segment and a dynamic balance shaft segment. The dynamic balance shaft segment is provided with multiple dynamic balance slots, all of which are located on an opposite side of the eccentric direction of the eccentric shaft segment. The eccentric shaft segment is in contact fit with the first rolling element. The dynamic balance shaft segment is in contact with the fourth sealing washer 63 and is configured to connect the rotor frame 54. The motion track of the axis of the second constant-speed tooth 50 in the constant-speed output race is a cylindrical surface whose radius is equal to the eccentric distance of the eccentric shaft segment. The difference between the radial minimum point and the radial maximum point of the race centerline of the cycloid race is twice the eccentric distance of the eccentric shaft segment. The first cover 59 is provided with four circumferentially evenly distributed first posts. The second cover 61 is provided with four circumferentially evenly distributed second posts. The first posts are fitted with the second posts, and eighth screw 64 is inserted into each of the second posts. A threaded portion of the eighth screw 64 is fitted with an inner threaded hole of the first post, such that the second cover 61 is fixedly provided on the first cover 59. There is a gap between each of the first support and the second support along the axial direction for clamping and mounting the servo drive module 60. The servo drive module 60 is provided with a control circuit board and two bus connectors. The bus connectors are used for outer cables. The second cover 61 is provided with three indicator covers, which respectively correspond to three indicator lights of different colors on the servo drive module 60. The first rolling element 47 is composed of cylindrical rollers that are circumferentially evenly distributed in a cage. The second rolling element 49 is composed of circumferentially evenly distributed crossed cylindrical rollers and retaining pieces provided between every two cylindrical rollers or is composed of circumferentially evenly distributed closely-packed balls.

FIGS. 61 to 63 illustrate Embodiment 12 of the present invention. In this embodiment, the second rolling element 49 is a crossed rolling element. A cycloid reduction pair is provided between third fixed wheel 39 and third transmission wheel 44. The cycloid race is a combined outer tooth surface race with 20 waves and 21 fourth movable teeth 51. A constant-speed output pair is provided between the third transmission wheel 44 and the third output wheel 43 and has 16 second constant-speed teeth 50. All the fourth movable teeth 51 and the second constant-speed teeth 50 adopt standard balls. In Embodiment 12, stator core 53 has 36 poles and 40 permanent magnets 56. That is, a 36N40P brushless motor structure is adopted. The number of dynamic balance slots is 2.

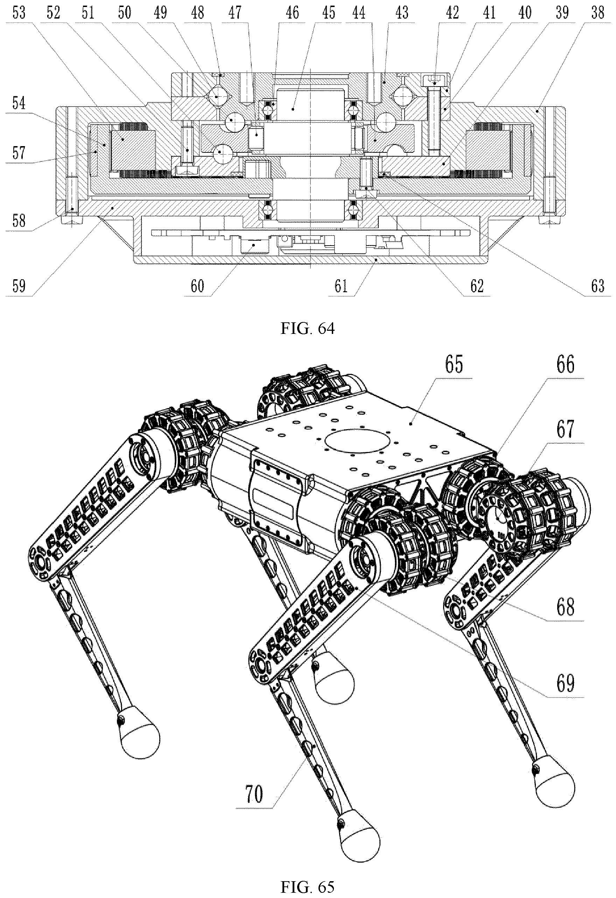

FIG. 64 illustrates Embodiment 13 of the present invention. The structure and parameters of this embodiment are the same as those of Embodiment 12 except for the second rolling element 49. In Embodiment 13, the second rolling element 49 adopts closely-packed standard steel balls. Its performance is slightly worse than that of in Embodiment 12, but its manufacturing cost is reduced.

The working principles of Embodiment 12 and Embodiment 13 are as follows. In operation, the bus connectors are connected to the outer cables, and the electrical signal is transmitted to the control circuit board. After signal processing, the control circuit board further provides the copper coil 55 with a specific regular current, so as to realize the specific regular rotation of the rotor frame 54. When the rotor frame 54 rotates, the drive shaft 45 is driven to rotate, thereby driving the third transmission wheel 44 hinged to the eccentric shaft segment through the first rolling element 47 to rotate. For example, in Embodiment 12, when the third transmission wheel 44 rotates, the relative positions of all the fourth movable teeth 51 in the third fixed wheel 39 remain unchanged. The second meshing pair on the third transmission wheel 44, that is, the combined tooth surface epicycloid race is in contact meshing with all the fourth movable teeth 51. The fourth movable tooth 51 reacts to the third transmission wheel 44 through the second meshing pair and thus it rotates along its own axis. In this way, the third transmission wheel 44 revolves around the axis of the rotor frame 54 while rotating around the eccentric shaft segment, and the rotation is decelerated compared to the revolution. Further, the relative positions of all the second constant-speed teeth 50 in the third output wheel 43 remain unchanged, and the third meshing pair on the third transmission wheel 44, that is, the constant-speed output race, is in contact meshing with all the second constant-speed teeth 50. All the second constant-speed teeth 50 are pushed, thereby driving the third output wheel 43 to rotate. That is, the constant-speed output of the rotation speed of the third transmission wheel 44 is completed by the third output wheel 43.

In this embodiment, there are two modes. In one mode, the motor housing 38 is fixed, and the third output wheel 43 performs deceleration output. In the other mode, the third output wheel 43 is fixed, and the motor housing 38 performs deceleration output. In particular, when the motor housing 38 is fixed and the third output wheel 43 is driven, if the servo control module 60 is properly controlled, this embodiment can be used as a generator.

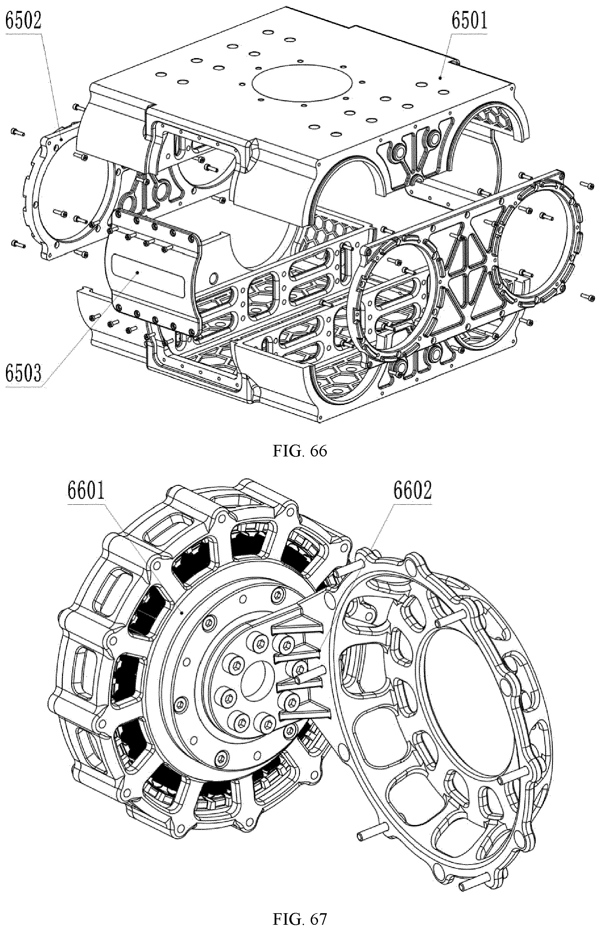

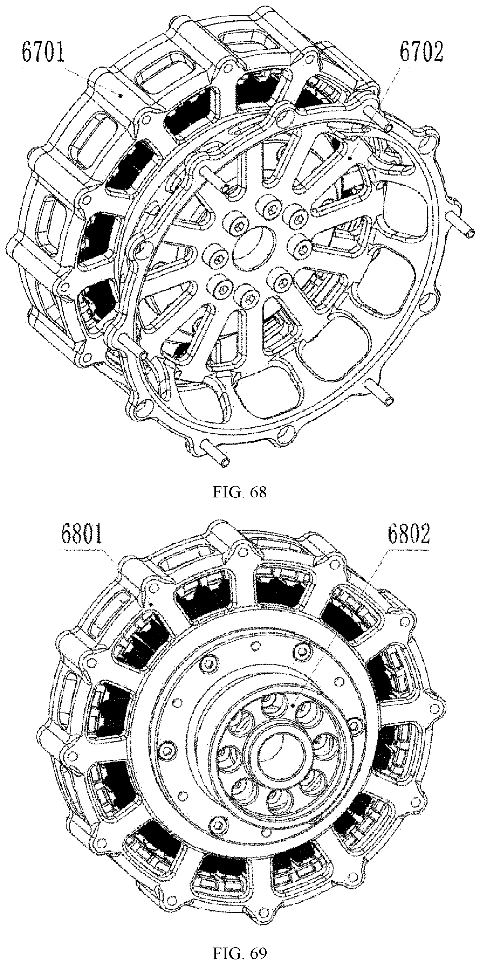

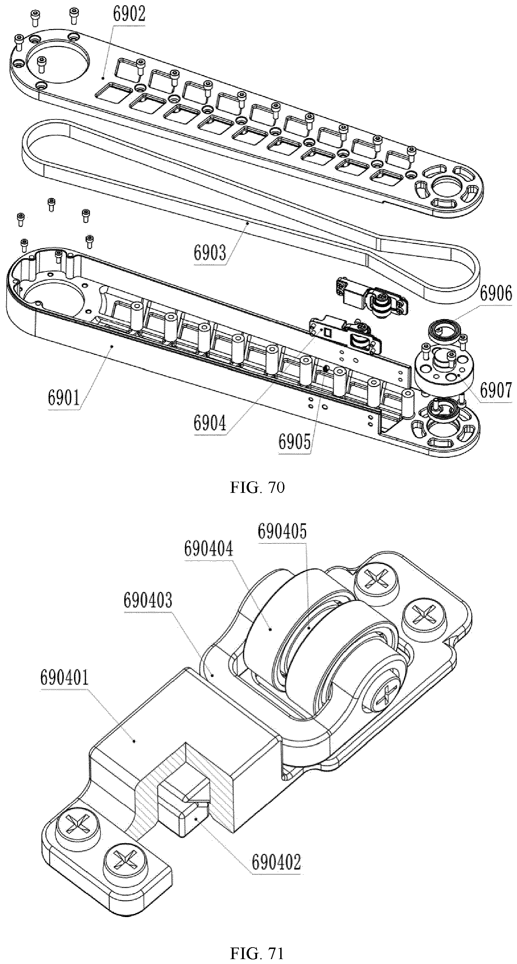

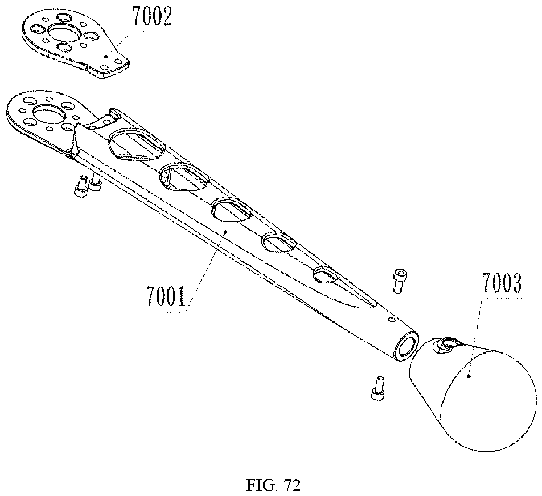

FIGS. 65 to 72 illustrate a mechanical dog with an integrated cycloid steel ball movable tooth transmission according to Embodiment 14 of the present invention. In this embodiment, the integrated cycloid steel ball movable tooth transmission mechanical dog includes body module 65, two crotch joint modules 66, two thigh joint modules 67, two calf joint modules 68, two thigh modules 69, and two calf modules 70. The crotch joint module 66 is composed of crotch joint integrated motor 6601 and crotch support 6602 provided at an output end of the crotch joint integrated motor. The crotch joint module 66 is fixedly provided on the body module 65 through the crotch joint integrated motor 6601. The two crotch joint modules 66 are fixedly provided on two ends of the body module 65, respectively. The thigh joint module 67 is composed of thigh joint integrated motor 6701 and a thigh support 6702 provided at an output end of the thigh joint integrated motor. The thigh joint module 67 is fixedly provided on the crotch support 6602 through the thigh joint integrated motor 6701. The calf joint module 68 is composed of calf joint integrated motor 6801 and first pulley 6802 provided at an output end of the calf joint integrated motor. The calf joint module 68 is fixedly provided on the thigh support 6702 through the calf joint integrated motor 6801. The thigh module 69 is fixedly provided on a housing of the calf joint integrated motor 6801. The calf module 68 is provided on the thigh module 69. The crotch joint integrated motor 6601, the thigh joint integrated motor 6701 and the calf joint integrated motor 6801 are all integrated flat movable tooth transmission brushless motors.

Further, the body module 65 includes two first bodies 6501, two second bodies 6502 and two third bodies 6503. The two first bodies 6501 have a grid structure inside, and they are fastened together. There is space between the two first bodies for placing batteries, communication equipment and cargo. The two second bodies 6502 are respectively fixed on two end surfaces of the two first bodies 6501 for connecting the crotch joint modules 66. The two third bodies 6503 are fixedly provided on two sides of the two first bodies 6501 respectively.

Further, the thigh module 69 includes first thigh plate 6901, second thigh plate 6902, timing belt 6903, tensioning device 6904, tensioning screw 6905, calf joint bearing 6906, and second pulley 6907. The second thigh plate 6902 is fixedly provided on the first thigh plate 6901 by a screw. The first thigh plate 6901 is fixedly provided on the housing of the calf joint integrated motor 6801 by a screw. Two ends of the second pulley 6907 are hinged to the first thigh plate 6901 and the second thigh plate 6902 through the calf joint bearing 6906 respectively. The timing belt 6903 has one end sleeved on the second pulley 6907 and the other end sleeved on the first pulley 6802 of the calf joint module 68. The tensioning device 6904 and the tensioning screw 6905 in contact with the tensioning device 6904 are fixedly provided on two sides inside the first thigh plate 6901. The tensioning device 6904 is in contact fit with the timing belt 6903.

Further, the tensioning device 6904 includes box body 690401, pre-tightening wedge 690402, sliding wedge 690403, rollers 690404, and roller shaft 690405. The box body 690401 is fixedly provided on the first thigh plate 6901 by a screw. The pre-tightening wedge 690402 and the sliding wedge 690403 are inserted into the box body 690401, with their surfaces are in contact fit with each other. The roller shaft 690405 is fixedly provided on an overhanging end of the sliding wedge 690403 by a screw. Two rollers 690404 are hinged to the roller shaft 690405. The tensioning screw 6905 provided on the first thigh plate 6901 is in contact fit with the pre-tightening wedge 690402.

Further, the calf module 70 includes first calf plate 7001, second calf plate 7002, and foot module 7003. The second calf plate 7002 is fixedly provided on the first calf plate 7001 by screws. The first calf plate 7001 and the second calf plate 7002 are fixedly provided on two sides of the second pulley 6907 by screws. The foot module 7003 is fixedly provided on an end of the first calf plate 7001. The first calf plate 7001 is a hollow structure, with an inner space for wiring of the foot module 7003.

Further, the foot module 7003 is a foot with a force sensor, or an electric wheel composed of a wheel integrated with a motor or a reducer. The wheel of the electric wheel is disc-shaped with a solid or hollow tire or is a Mecanum wheel.

In Embodiment 14, the calf module 70 adopts the foot module 7003 of the foot with a force sensor. The rims of the first pulley 6802 and the second pulley 6907 have teeth, which together with the timing belt 6903 form a timing belt transmission mechanism. In the state shown in FIG. 65, the whole machine is 89 cm long, 44 cm wide and 57 cm high. In this state, the angle between a central axis of the thigh module 69 and an upper surface of the body module 65 is 45°, and the angle between a central axis of the calf module 70 and the central axis of the thigh module 69 is 90°.

In Embodiment 14, the angle between the central axis of the thigh module 69 and the upper surface of the body module 65 ranges from 0° to 360°. The angle between the central axis of the calf module 70 and the central axis of the thigh module 69 ranges from 60° to 300°.

The working principle of Embodiment 14 is as follows. The mechanical leg is composed of the crotch joint modules 66, the thigh joint modules 67, the calf joint modules 68, the thigh modules 69 and the calf modules 70 that are connected in sequence. The mechanical leg has three degrees of freedom. Since two mechanical legs are provided on the two ends of the body module 65, there are a total of 12 degrees of freedom.

In use, the mechanical dog is powered by the battery in the body module 65. The communication devices in the body module 65 can be remotely controlled. A master control device in the body module 65 is configured to send a real-time control signal to each mechanical leg. The control signal is transmitted to the servo control module 60 of each integrated flat movable tooth transmission brushless motor to control the rotation angle of each integrated flat movable tooth transmission brushless motor. These motors include the crotch joint integrated motor 6601, the thigh joint integrated motor 6701, and the calf joint integrated motor 6801 on each mechanical leg.

The crotch joint integrated motor 6601 rotates to drive the crotch support 6602 to rotate. The thigh joint module 67, the calf joint module 68, the thigh module 69 and the calf module 70 are connected in sequence, and the thigh joint module 67 is fixedly provided on the crotch support 6602. When the crotch support 6602 rotates, it drives the thigh joint module 67, the calf joint module 68, the thigh module 69 and the calf module 70 to rotate around the axis of the crotch joint integrated motor 6601.

The thigh joint integrated motor 6701 rotates to drive the thigh support 6702 to rotate. The calf joint module 68, the thigh module 69 and the calf module 70 are connected in sequence, and the calf joint module 68 is fixedly provided on the thigh support 6702. When the thigh support 6702 rotates, it drives the calf joint module 68, the thigh module 69 and the calf module 70 to rotate around the axis of the thigh joint integrated motor 6701. Since the thigh module 69 is fixedly provided on the calf joint module 68, the rotation realizes the swing of the thigh module 69.

The calf joint integrated motor 6801 rotates to drive the first pulley 6802 to rotate, the first pulley 6802 drives the timing belt 6903 to rotate, and the timing belt 6903 drives the second pulley 6907 to rotate. The calf module 70 is fixedly provided on the second pulley 6907, so when the second pulley 6907 rotates, the calf module 70 rotates accordingly.

The realization of the three degrees of freedom of each mechanical leg is described above. The three degrees of freedom include the swing about the axis of the crotch joint integrated motor 6601, the swing of the thigh module 69 and the swing of the calf module 70.

The two tensioning devices 6904 built into the thigh module 69 are configured to tension the timing belt 6903. The tensioning screw 6905 provided on the first thigh plate 6901 is screwed to move the pre-tightening wedge 690402 in contact therewith. The surface of the sliding wedge 690403 is in contact fit with the wedge surface of the pre-tightening wedge 690402 to form a wedge-shaped mechanism. When the pre-tightening wedge 690402 moves, it causes the sliding wedge 690403 to move. In this way, the pressing and loosening of the timing belt 6903 is realized by the two rollers 690404.

When the foot module 7003 uses a foot with a force sensor, the mechanical dog only has the function of walking. In this case, the force sensor is built into the foot. The lead wire of the force sensor passes through the hollow first calf plate 7001 and the first thigh plate 6901 and is finally connected to the master control device of the body module 65. When the foot module 7003 adopts the electric wheel composed of the wheel integrated with the motor and the reducer, the mechanical dog has the function of walking and fast moving. In this way, the mechanical dog becomes a cart capable of walking and running, suitable for a variety of terrain environments.

It should be noted that relational terms herein such as first and second are merely used to distinguish one entity or operation from another entity or operation without necessarily requiring or implying any actual such relationship or order between such entities or operations. In addition, terms "include", "comprise", or any other variations thereof are intended to cover a non-exclusive inclusion, so that a process, a method, an article, or a device including a series of elements not only includes those elements, but also includes other elements that are not explicitly listed, or also includes inherent elements of the process, the method, the article, or the device.

Finally, it should be noted that the above descriptions are only preferred embodiments of the present invention and are not intended to limit the present invention Although the present invention is described in detail with reference to the foregoing embodiments, a person skilled in the art can still make modifications to the technical solutions described in the foregoing embodiments or make equivalent replacement of some technical features therein, without departing from the scope of protection as defined by the appended claims.

**Claims**

1. A cycloidal movable tooth transmission mechanism with a combined tooth surface, comprising two cycloidal gears (3) and multiple circumferentially evenly distributed movable teeth or comprising one or two cycloidal gears (3) and a movable gear (4) and multiple circumferentially evenly distributed movable teeth wherein a sum of a number of the cycloidal gear and a number of the movable gear is greater than 1; wherein each cycloidal gear (3) is provided with a combined tooth surface race (1), the combined tooth surface race (1) is a combined tooth surface epicycloid race or a combined tooth surface hypocycloid race; the combined tooth surface epicycloid race comprises positive tooth surfaces (101) and negative tooth surfaces (102), which are circumferentially evenly distributed about an axis of the cycloidal gear (3) and have an equal number; a meshing curve of the combined tooth surface epicycloid race is an epicycloid; the combined tooth surface hypocycloid race comprises positive tooth surfaces (101) and negative tooth surfaces (102) which are circumferentially evenly distributed about the axis of the cycloidal gear and have an equal number; a meshing curve of the combined tooth surface hypocycloid race is a hypocycloid; all meshing curve segments corresponding to the positive tooth surfaces (101) and negative tooth surfaces (102) are part of any band of the epicycloid or hypocycloid; and are symmetrical bands; and take a crest or trough as a center; wherein a movable tooth surface (201) is a rotating surface about an axis of the movable tooth (2), and each movable tooth surface is a theoretical movable tooth surface or an actual movable tooth surface; the actual movable tooth surface is a rotating inscribed surface of the theoretical movable tooth surface; when a center of the movable tooth is located on the meshing curve segment of the positive tooth surface or the negative tooth surface, the theoretical movable tooth surface is always fit with the positive tooth surface or the negative tooth surface; all the movable teeth are in contact meshing with the combined tooth surface race; a number of movable teeth meshing with the combined tooth surface epicycloid race is one more than a wave number of the combined tooth surface epicycloid race; and a number of movable teeth meshing with the combined tooth surface hypocycloid race is one less than a wave number of the combined tooth surface hypocycloid race;

   wherein, when provided, the movable gear (4) is provided with multiple movable tooth slots (5) that are circumferentially evenly distributed about an axis of the movable gear; a number of the multiple movable tooth slots is equal to a number of the multiple movable teeth; each of the movable tooth slots runs through or does not run through the movable gear; each movable tooth slot surface is completely fit with the theoretical movable tooth surface; and one movable tooth meshes in each movable tooth slot;

when there are two cycloidal gears (3), the two cycloidal gears (3) each are provided with the combined tooth surface epicycloid race and the combined tooth surface hypocycloid race, respectively; the combined tooth surface epicycloid race and the combined tooth surface hypocycloid race have a same amplitude; a wave number of the combined tooth surface epicycloid race is two less than a wave number of the combined tooth surface hypocycloid race; the two cycloidal gears are eccentrically arranged; and the axes of the two cycloidal gears are parallel to each other, and are at a distance that is equal to a sum of the amplitude of the combined tooth surface epicycloid race and the amplitude of the combined tooth surface hypocycloid race; and

when there is one movable gear (4), the cycloidal gear (3) and the movable gear (4) are eccentrically arranged; and the axes of the cycloidal gear (3) and the movable gear (4) are parallel to each other and are at a distance that is equal to an amplitude of the meshing curve,

**characterized in that**

the combined tooth surface epicycloid race comprises positive rotary-cut surfaces (103) which are circumferentially evenly distributed about an axis of the cycloidal gear and have an equal number with the number of positive tooth surfaces and negative tooth surfaces and the combined tooth surface hypocycloid race comprises negative rotary-cut surfaces (104) which are circumferentially evenly distributed about the axis of the cycloidal gear and have an equal number with the number of positive tooth surfaces and negative tooth surfaces; the positive rotary-cut surface is located between two positive tooth surfaces; and the negative rotary-cut surface is located between two negative tooth surfaces; and

the meshing curve of the cycloidal gear extends infinitely to two ends along the axis of the cycloidal gear to form a meshing cylindrical surface; a space surrounded by the positive tooth surfaces, the negative tooth surfaces and the meshing cylindrical surface are removed from the cycloidal gear to form a circle of circumferentially evenly distributed triangular prisms having a same number as the positive tooth surfaces or negative tooth surfaces on the cycloidal gear; the triangular prisms each comprise two flat sides and one curved side, the curved side is part of the meshing cylindrical surface; an edge of one flat side of any triangular prism intersecting with the curved side of the triangular prism is extended outside by a first width to form a section, and then the section is rotated around an intersection of the two flat sides to the other flat side to perform a rotary cut; after the rotary cut, a curved surface left on the cycloidal gear forms the positive or negative rotary-cut surface.

2. The cycloidal movable tooth transmission mechanism with the combined tooth surface according to claim 1, wherein a union of all the meshing curve segments of the positive tooth surfaces (101) and the negative tooth surfaces (102) on the combined tooth surface epicycloid race or the combined tooth surface hypocycloid race forms a complete, closed meshing curve, which is the meshing curve of the combined tooth surface epicycloid race or the combined tooth surface hypocycloid race; and parametric equations of the meshing curve of the combined tooth surface epicycloid race in a rectangular coordinate system in space are:

$$\begin{cases} x = R\cos\varphi - A\cos[(1+Z_c)\varphi] \\ y = R\sin\varphi - A\sin[(1+Z_c)\varphi] \end{cases} \quad \varphi \in [0, 2\pi)$$

parametric equations of the meshing curve of the combined tooth surface hypocycloid race in the rectangular coordinate system in space are:

$$\begin{cases} x = R\cos\varphi + A\cos[(1-Z_c)\varphi] \\ y = R\sin\varphi + A\sin[(1-Z_c)\varphi] \end{cases} \quad \varphi \in [0, 2\pi)$$

wherein, R denotes a radius of the meshing curve; A denotes the amplitude of the meshing curve; and $Z_c$ denotes a wave number of the meshing curve.

3. The cycloidal movable tooth transmission mechanism with the combined tooth surface according to claim 2, wherein a curvature radius p of the meshing curve is:

$$\rho = \frac{\sqrt{\left[\left(\dfrac{dx}{d\varphi}\right)^2 + \left(\dfrac{dy}{d\varphi}\right)^2\right]^3}}{\dfrac{dx}{d\varphi}\dfrac{d^2y}{d\varphi^2} - \dfrac{dy}{d\varphi}\dfrac{d^2x}{d\varphi^2}} \qquad \varphi \in [0, 2\pi).$$

4. The cycloidal movable tooth transmission mechanism with the combined tooth surface according to claim 3, wherein a maximum distance from a point on the theoretical movable tooth surface to an axis of the theoretical movable tooth surface is $D_{max}$:

$$\rho_{1\min} \geq D_{\max} > \rho_{\min}$$

wherein, $\rho_{\min}$ denotes a minimum curvature radius $p$ of the meshing curve; and
$\rho_{1min}$ denotes a minimum curvature radius of the meshing curve segment corresponding to the positive tooth surface or the negative tooth surface.

5. The cycloidal movable tooth transmission mechanism with the combined tooth surface according to claim 4, wherein the first width $\varDelta$ satisfies:

$$\Delta \leq D_{\max}$$

wherein, $D_{max}$ denotes the maximum distance from the point on the theoretical movable tooth surface to the axis of the theoretical movable tooth surface.

6. The cycloidal movable tooth transmission mechanism with the combined tooth surface according to claim 1, wherein when a movable gear is provided, the multiple movable teeth are in contact with each other, and each mesh with one cycloidal gear and the movable gear, and the multiple movable tooth slots (5) on the movable gear (4) do not run through the movable gear.

7. The cycloidal movable tooth transmission mechanism with the combined tooth surface according to claim 6, wherein the multiple movable tooth slots are formed by combining a circle of evenly distributed contact slot surfaces (501) and non-contact slot surfaces (502) with a same number as the multiple movable teeth; the contact slot surface is in contact meshing with the movable tooth; the non-contact slot surface is a transition surface between two adjacent contact slot surfaces; and the non-contact slot surface is not in contact with the movable tooth.

8. The cycloidal movable tooth transmission mechanism with the combined tooth surface according to claim 1, when two cycloidal gears are provided, wherein the multiple movable teeth are in contact with each other, and each mesh with one cycloidal gear with a combined tooth surface epicycloid race and one cycloidal gear with a combined tooth surface hypocycloid race.

9. The cycloidal movable tooth transmission mechanism with the combined tooth surface according to claim 6 or 8, wherein a maximum distance from a point on the theoretical movable tooth surface to an axis of the theoretical movable tooth surface is $D_{max}$:

$$D_{\max} = R\sin(\pi / Z_b)$$

wherein, $R$ denotes a radius of the meshing curve; and $Z_b$ denotes a number of the movable teeth.

10. The cycloidal movable tooth transmission mechanism with the combined tooth surface according to claim 1, wherein when a movable gear is provided, the multiple movable teeth each mesh with one cycloidal gear with a combined tooth surface epicycloid race, the movable gear, and one cycloidal gear with a combined tooth surface hypocycloid race; the movable gear is located between the cycloidal gear with the combined tooth surface epicycloid race and the cycloidal gear with the combined tooth surface hypocycloid race; the multiple movable tooth slots on the movable gear run through the movable gear; and the movable gear is in the shape of a disc, a circular ring, or a conical ring.

**Patentansprüche**

1. Beweglicher Zykloiden-Zahnübertragungsmechanismus mit kombinierter Zahnoberfläche, umfassend zwei Zykloidenzahnräder (3) und mehrere umfangseitig gleichmäßig verteilte bewegliche Zähne oder umfassend ein oder zwei Zykloidenzahnräder (3) und ein bewegliches Zahnrad (4) und mehrere umfangseitig gleichmäßig verteilte bewegliche Zähne, wobei eine Summe einer Anzahl des Zykloidenzahnrads und einer Anzahl des beweglichen Zahnrads größer als 1 ist,

wobei jedes Zykloidenzahnrad (3) mit einem kombinierten Zahnoberflächenlaufring (1) ausgestattet ist, der kombinierte Zahnoberflächenlaufring (1) ein kombinierter Epizykloiden-Zahnoberflächenring oder ein kombinierter Hypozykloiden-Zahnoberflächenring ist, der kombinierte Epizykloiden-Zahnoberflächenring positive Zahnoberflächen (101) und negative Zahnoberflächen (102) umfasst, die umfangseitig gleichmäßig um eine Achse des Zykloidenzahnrads (3) verteilt sind und eine gleiche Anzahl aufweisen, eine Verzahnungskurve des kombinierten Epizykloiden-Zahnoberflächenrings eine Epizykloide ist, der kombinierte Hypozykloiden-Zahnoberflächenring positive Zahnoberflächen (101) und negative Zahnoberflächen (102) umfasst, die umfangseitig gleichmäßig um die Achse des Zykloidenzahnrads verteilt sind und eine gleiche Anzahl aufweisen, eine Verzahnungskurve des kombinierten Hypozykloiden-Zahnoberflächenrings eine Hypozykloide ist, alle Verzahnungskurvensegmente, die den positiven Zahnoberflächen (101) und negativen Zahnoberflächen (102) entsprechen, Teil eines beliebigen Bands der Epizykloide oder Hypozykloide sind und symmetrische Bänder sind und eine Erhebung oder Vertiefung als Mittelpunkt aufweisen, wobei eine bewegliche Zahnoberfläche (201) eine rotierende Oberfläche um eine Achse des beweglichen Zahns (2) ist und jede bewegliche Zahnoberfläche eine theoretische bewegliche Zahnoberfläche oder eine tatsächliche bewegliche Zahnoberfläche ist, die tatsächliche bewegliche Zahnoberfläche eine rotierende einbeschriebene Oberfläche der theoretischen beweglichen Zahnoberfläche ist, die theoretische bewegliche Zahnoberfläche stets mit der positiven Zahnoberfläche oder der negativen Zahnoberfläche übereinstimmt, wenn eine Mitte des beweglichen Zahns im Verzahnungskurvensegment der positiven Zahnoberfläche oder der negativen Zahnoberfläche befindlich ist, alle beweglichen Zähne in Kontaktverzahnung mit dem kombinierten Zahnoberflächenlaufring sind, eine Anzahl von beweglichen Zähnen, die mit dem kombinierten Epizykloiden-Zahnoberflächenring verzahnt sind, um eins größer ist als eine Wellenanzahl des kombinierten Epizykloiden-Zahnoberflächenrings und eine Anzahl von beweglichen Zähnen, die mit dem kombinierte Hypozykloiden-Zahnoberflächenring verzahnt sind, um eins kleiner ist als eine Wellenanzahl des kombinierten Hypozykloiden-Zahnoberflächenrings,

wobei das bewegliche Zahnrad (4), wenn bereitgestellt, mit mehreren beweglichen Zahnschlitzen (5) versehen ist, die umfangseitig gleichmäßig um eine Achse des beweglichen Zahnrads verteilt sind, eine Anzahl der mehreren beweglichen Zahnschlitze gleich einer Anzahl der mehreren beweglichen Zähne ist, ein jeder der beweglichen Zahnschlitze durch das bewegliche Zahnrad verläuft oder nicht dadurch verläuft, eine jede bewegliche Zahnschlitzoberfläche vollständig mit der theoretischen beweglichen Zahnoberfläche übereinstimmt und ein beweglicher Zahn in jeden beweglichen Zahnschlitz eingreift,

wenn zwei Zykloidenzahnräder (3) bereitgestellt sind, die beiden Zykloidenzahnräder (3) jeweils mit dem kombinierten Epizykloiden-Zahnoberflächenring bzw. dem kombinierten Hypozykloiden-Zahnoberflächenring versehen sind, der kombinierte Epizykloiden-Zahnoberflächenring und der kombinierte Hypozykloiden-Zahnoberflächenring die gleiche Amplitude aufweisen, eine Wellenanzahl des kombinierten Epizykloiden-Zahnoberflächenrings um zwei kleiner ist als eine Wellenanzahl des kombinierten Hypozykloiden-Zahnoberflächenrings, die beiden Zykloidenzahnräder exzentrisch angeordnet sind und die Achsen der beiden Zykloidenzahnräder parallel zueinander sind und sich in einem Abstand befinden, der gleich einer Summe der Amplitude des kombinierten Epizykloiden-Zahnoberflächenrings und der Amplitude des kombinierten Hypozykloiden-Zahnoberflächenrings ist und

das Zykloidenzahnrad (3) und das bewegliche Zahnrad (4) exzentrisch angeordnet sind, wenn ein bewegliches Zahnrad (4) bereitgestellt ist, und die Achsen des Zykloidenzahnrads (3) und des beweglichen Zahnrads (4) parallel zueinander sind und einen Abstand aufweisen, der gleich einer Amplitude der Verzahnungskurve ist,
**dadurch gekennzeichnet, dass**
der kombinierte Epizykloiden-Zahnoberflächenring positive Rotationsschnittflächen (103) umfasst, die umfangseitig gleichmäßig um eine Achse des Zykloidenzahnrads verteilt sind und eine gleiche Anzahl wie die Anzahl von positiven Zahnoberflächen und negativen Zahnoberflächen aufweisen, und der kombinierte Hypozykloiden-Zahnoberflächenring negative Rotationsschnittflächen (104) umfasst, die umfangseitig gleichmäßig um die Achse des Zykloidenzahnrads verteilt sind und eine gleiche Anzahl wie die Anzahl von positiven Zahnoberflächen und negativen Zahnoberflächen aufweisen, die positive Rotationsschnittfläche sich zwischen zwei positiven Zahnoberflächen befindet und die negative Rotationsschnittfläche sich zwischen zwei negativen Zahnoberflächen befindet und

sich die Verzahnungskurve des Zykloidenzahnrads unendlich bis zu zwei Enden entlang der Achse des Zykloidenzahnrads erstreckt, um eine zylindrische Verzahnungsfläche zu bilden, ein von den positiven Zahnoberflächen umgebener Raum, die negativen Zahnoberflächen und die zylindrische Verzahnungsfläche vom Zykloidenzahnrad entfernt werden, um einen Kreis von umfangseitig gleichmäßig verteilten dreieckigen Prismen in einer gleichen Anzahl wie die positiven Zahnflächen oder negativen Zahnoberflächen auf dem Zykloidenzahnrad zu bilden, die dreieckigen Prismen jeweils zwei flache Seiten und eine gekrümmte Seite umfassen, die gekrümmte Seite Teil der zylindrischen Verzahnungsfläche ist, eine Kante einer flachen Seite eines jeden dreieckigen Prismas, das sich mit der gekrümmten Seite des dreieckigen Prismas schneidet, nach außen um eine erste Breite ausgedehnt wird, um eine Sektion zu bilden, und die Sektion dann um einen Schnittpunkt der beiden flachen Seiten zur anderen flachen Seite gedreht wird, um einen Rotationsschnitt durchzuführen, nach dem Rotationsschnitt eine auf dem Zykloidenzahnrad verbleibende gekrümmte Oberfläche die positive oder negative Rotationsschnittfläche bildet.

2. Beweglicher Zykloiden-Zahnübertragungsmechanismus mit kombinierter Zahnoberfläche nach Anspruch 1, wobei eine Verbindung aller Verzahnungskurvensegmente der positiven Zahnoberflächen (101) und der negativen Zahnoberflächen (102) auf dem kombinierten Epizykloiden-Zahnoberflächenring oder dem kombinierten Hypozykloiden-Zahnoberflächenring eine vollständige geschlossene Verzahnungskurve bildet, die die Verzahnungskurve des kombinierten Epizykloiden-Zahnoberflächenrings oder des kombinierten Hypozykloiden-Zahnoberflächenrings ist, und parametrische Gleichungen der Verzahnungskurve des kombinierten Epizykloiden-Zahnoberflächenrings in einem rechteckigen Koordinatensystem im Raum wie folgt sind:

$$\begin{cases} x = R\cos\varphi - A\cos[(1+Z_c)\varphi] \\ y = R\sin\varphi - A\sin[(1+Z_c)\varphi] \end{cases} \qquad \varphi \in [0, 2\pi)$$

parametrische Gleichungen der Verzahnungskurve des kombinierten Hypozykloiden-Zahnoberflächenrings im rechteckigen Koordinatensystem im Raum wie folgt sind:

$$\begin{cases} x = R\cos\varphi + A\cos[(1-Z_c)\varphi] \\ y = R\sin\varphi + A\sin[(1-Z_c)\varphi] \end{cases} \qquad \varphi \in [0, 2\pi)$$

wobei $R$ ein Radius der Verzahnungskurve ist, $A$ die Amplitude der Verzahnungskurve ist und $Z_c$ eine Wellenanzahl der Verzahnungskurve ist.

3. Beweglicher Zykloiden-Zahnübertragungsmechanismus mit kombinierter Zahnoberfläche nach Anspruch 2, wobei ein Krümmungsradius $p$ der Verzahnungskurve wie folgt ist:

$$\rho = \frac{\sqrt{\left[\left(\dfrac{dx}{d\varphi}\right)^2 + \left(\dfrac{dy}{d\varphi}\right)^2\right]^3}}{\dfrac{dx}{d\varphi}\dfrac{d^2y}{d\varphi^2} - \dfrac{dy}{d\varphi}\dfrac{d^2x}{d\varphi^2}} \qquad \varphi \in [0, 2\pi)$$

4. Beweglicher Zykloiden-Zahnübertragungsmechanismus mit kombinierter Zahnoberfläche nach Anspruch 3, wobei ein maximaler Abstand von einem Punkt auf der theoretischen beweglichen Zahnoberfläche von einer Achse der theoretischen beweglichen Zahnoberfläche $D_{max}$ wie folgt ist:

$$\rho_{1min} \geq D_{max} > \rho_{min}$$

wobei $p_{min}$ ein minimaler Krümmungsradius $p$ der Verzahnungskurve ist und
$p_{1min}$ ein minimaler Krümmungsradius des Verzahnungskurvensegments, das der positiven Zahnoberfläche oder der negativen Zahnoberfläche entspricht, ist.

5. Beweglicher Zykloiden-Zahnübertragungsmechanismus mit kombinierter Zahnoberfläche nach Anspruch 4, wobei die erste Breite $\Delta$ Folgendes erfüllt:

$$\Delta \le D_{max}$$

wobei $D_{max}$ der maximale Abstand vom Punkt auf der theoretischen beweglichen Zahnoberfläche zur Achse der theoretischen beweglichen Zahnoberfläche ist.

6. Beweglicher Zykloiden-Zahnübertragungsmechanismus mit kombinierter Zahnoberfläche nach Anspruch 1, wobei, wenn ein bewegliches Zahnrad bereitgestellt ist, die mehreren beweglichen Zähne miteinander in Kontakt stehen und jeweils mit einem Zykloidenzahnrad und dem beweglichen Zahnrad verzahnt sind und die mehreren beweglichen Zahnschlitze (5) auf dem beweglichen Zahnrad (4) nicht durch das bewegliche Zahnrad verlaufen.

7. Beweglicher Zykloiden-Zahnübertragungsmechanismus mit kombinierter Zahnoberfläche nach Anspruch 6, wobei die mehreren beweglichen Zahnschlitze durch Kombinieren eines Kreises aus gleichmäßig verteilten Kontaktschlitzoberflächen (501) und berührungslosen Schlitzoberflächen (502) in einer gleichen Anzahl wie die mehreren beweglichen Zähne gebildet werden, die Kontaktschlitzoberfläche in Kontaktverzahnung mit dem beweglichen Zahn ist, die berührungslose Schlitzoberfläche eine Übergangsfläche zwischen zwei benachbarten Kontaktschlitzoberflächen ist und die berührungslose Schlitzoberfläche nicht mit dem beweglichen Zahn in Kontakt ist.

8. Beweglicher Zykloiden-Zahnübertragungsmechanismus mit kombinierter Zahnoberfläche nach Anspruch 1, wenn zwei Zykloidenzahnräder bereitgestellt sind,
wobei die mehreren beweglichen Zähne miteinander in Kontakt stehen und ein jeder mit einem Zykloidenzahnrad mit einem kombinierten Epizykloiden-Zahnoberflächenring und einem Zykloidenzahnrad mit einem kombinierten Hypozykloiden-Zahnoberflächenring verzahnt ist.

9. Beweglicher Zykloiden-Zahnübertragungsmechanismus mit kombinierter Zahnoberfläche nach Anspruch 6 oder 8, wobei ein maximaler Abstand von einem Punkt auf der theoretischen beweglichen Zahnoberfläche zu einer Achse der theoretischen beweglichen Zahnoberfläche $D_{max}$ wie folgt ist:

$$D_{max} = R\sin(\pi / Z_b)$$

wobei $R$ ein Radius der Verzahnungskurve ist und $Z_b$ eine Anzahl der beweglichen Zähne ist.

10. Beweglicher Zykloiden-Zahnübertragungsmechanismus mit kombinierter Zahnoberfläche nach Anspruch 1, wobei, wenn ein bewegliches Zahnrad bereitgestellt ist, die mehreren beweglichen Zähne jeweils mit einem Zykloidenzahnrad mit einem kombinierten Epizykloiden-Zahnoberflächenring, dem beweglichen Zahnrad und einem Zykloidenzahnrad mit einem kombinierten Hypozykloiden-Zahnoberflächenring verzahnt sind, das bewegliche Zahnrad zwischen dem Zykloidenzahnrad mit dem kombinierten Epizykloiden-Zahnoberflächenring und dem Zykloidenzahnrad mit dem kombinierten Hypozykloiden-Zahnoberflächenring befindlich ist, die mehreren beweglichen Zahnschlitze auf dem beweglichen Zahnrad durch das bewegliche Zahnrad verlaufen und das bewegliche Zahnrad die Form einer Scheibe, eines kreisförmigen Rings oder eines kegelförmigen Rings aufweist.

**Revendications**

1. Mécanisme de transmission à dent mobiles cycloïdales à surface de dent combinée, comprenant deux engrenages cycloïdaux (3), une pluralité de dents mobiles équiréparties circonférentiellement ou comprenant un ou deux engrenages cycloïdaux (3), un engrenage mobile (4) et une pluralité de dents mobiles équiréparties circonférentiellement dans lequel une somme d'un nombre de l'engrenage cycloïdal et d'un nombre de l'engrenage mobile est supérieure à 1 ;

dans lequel chaque engrenage cycloïdal (3) est pourvu d'une bague à surface de dent combinée (1), la bague à surface de dent combinée (1) est une bague épicycloïde à surface de dent combinée ou une bague hypocycloïde à surface de dent combinée ; la bague épicycloïde à surface de dent combinée comprend des surfaces de dent positives (101) et des surfaces de dent négatives (102) qui sont équiréparties circonférentiellement autour d'un axe de l'engrenage cycloïdal (3) et ont un nombre égal ; une courbe d'engrènement de la bague épicycloïde à surface de dent combinée est un épicycloïde ; la bague hypocycloïde à surface de dent combinée comprend des surfaces de dent positives (101) et des surfaces de dent négatives (102) qui sont équiréparties circonférentiellement autour de l'axe de l'engrenage cycloïdal et ont un nombre égal ; une courbe d'engrènement de la bague hypocycloïde à surface de dent combinée est un hypocycloïde ; tous les segments de courbe d'engrènement correspondant aux surfaces de dent positives (101) et aux surfaces de dent négatives (102) font partie de toute bande de l'épicycloïde ou de l'hypocycloïde ; et sont des bandes symétriques ; et prennent une crête ou un creux comme centre ; dans lequel une surface de dent mobile (201) est une surface rotative autour d'un axe de la dent mobile (2), et chaque surface de dent mobile est une surface théorique de dent mobile ou une surface réelle de dent mobile ; la surface réelle de dent mobile est une surface inscrite rotative de la surface théorique de dent mobile ; lorsqu'un centre de la dent mobile est situé sur le segment de courbe d'engrènement de la surface de dent positive ou de la surface de dent négative, la surface théorique de dent mobile est toujours ajustée avec la surface de dent positive ou la surface de dent négative ; toutes les dents mobiles sont en contact d'engrènement avec la bague à surface de dent combinée ; un nombre de dents mobiles s'engrenant avec la bague épicycloïde à surface de dent combinée est supérieur de un à un nombre d'onde de la bague épicycloïde à surface de dent combinée ; et un nombre de dents mobiles s'engrenant avec la bague hypocycloïde à surface de dent combinée est un nombre inférieur de un à un nombre d'onde de la bague hypocycloïde à surface de dent combinée ;

dans lequel, lorsqu'il est fourni, l'engrenage mobile (4) est pourvu d'une pluralité de fentes de dent mobiles (5) qui sont équiréparties circonférentiellement autour d'un axe de l'engrenage mobile ; un nombre de la pluralité de fentes de dent mobiles est égal à un nombre de la pluralité de dents mobiles ; chacune des fentes de dent mobiles s'étend à travers ou ne s'étend pas à travers l'engrenage mobile ; chaque surface de fente de dent mobile est complètement ajustée avec la surface théorique de dent mobile ; et une dent mobile s'engrène dans chaque fente de dent mobile ;

lorsqu'il y a deux engrenages cycloïdaux (3), les deux engrenages cycloïdaux (3) sont chacun pourvus de la bague épicycloïde à surface de dent combinée et de la bague hypocycloïde à surface de dent combinée, respectivement ; la bague épicycloïde à surface de dent combinée et la bague hypocycloïde à surface de dent combinée ont une même amplitude ; un nombre d'onde de la bague épicycloïde à surface de dent combinée est deux inférieur à un nombre d'onde de la bague hypocycloïde à surface de dent combinée ; les deux engrenages cycloïdaux sont disposés de manière excentrique ; et les axes des deux engrenages cycloïdaux sont parallèles l'un à l'autre et sont à une distance qui est égale à une somme de l'amplitude de la bague épicycloïde à surface de dent combinée et de l'amplitude de la bague hypocycloïde à surface de dent combinée ; et

lorsqu'il y a un engrenage mobile (4), l'engrenage cycloïdal (3) et l'engrenage mobile (4) sont disposés de manière excentrique ; et les axes de l'engrenage cycloïdal (3) et de l'engrenage mobile (4) sont parallèles l'un à l'autre et sont à une distance qui est égale à une amplitude de la courbe d'engrènement,

**caractérisé en ce que**

la bague épicycloïde à surface de dent combinée comprend des surfaces de coupe rotative positives (103) qui sont équiréparties circonférentiellement autour d'un axe de l'engrenage cycloïdal et ont un nombre égal au nombre de surfaces de dent positives et de surfaces de dent négatives et la bague hypocycloïde à surface de dent combinée comprend des surfaces de coupe rotative négatives (104) qui sont équiréparties circonférentiellement autour de l'axe de l'engrenage cycloïdal et ont un nombre égal au nombre de surfaces de dent positives et de surfaces de dent négatives ; la surface de coupe rotative positive est située entre deux surfaces de dent positives ; et la surface de coupe rotative négative est située entre deux surfaces de dent négatives ; et la courbe d'engrènement de l'engrenage cycloïdal s'étend à l'infini vers deux extrémités le long de l'axe de l'engrenage cycloïdal pour former une surface cylindrique d'engrènement ; un espace entouré par les surfaces de dent positives, les surfaces de dent négatives et la surface cylindrique d'engrènement sont enlevées de l'engrenage cycloïdal pour former un cercle de prismes triangulaires équirépartis circonférentiellement ayant un même nombre que les surfaces de dent positives ou les surfaces de dent négatives sur l'engrenage cycloïdal ; les prismes triangulaires comprennent chacun deux côtés plats et un côté incurvé, le côté incurvé fait partie de la surface cylindrique d'engrènement ; un bord d'un côté plat de n'importe quel prisme triangulaire croisant le côté incurvé du prisme triangulaire est étendu à l'extérieur d'une première largeur pour former une section, puis la section est tournée autour d'une intersection des deux côtés plats vers l'autre côté plat pour effectuer une coupe rotative ; après la coupe rotative, une surface incurvée laissée sur l'engrenage cycloïdal forme la surface de coupe rotative positive ou négative.

2. Mécanisme de transmission à dent mobiles cycloïdales à surface de dent combinée selon la revendication 1, dans lequel une union de tous les segments de courbe d'engrènement des surfaces de dent positives (101) et des surfaces de dent négatives (102) sur la bague épicycloïde à surface de dent combinée ou la bague hypocycloïde à surface de dent combinée forme une courbe d'engrènement fermée complète, qui est la courbe d'engrènement de la bague épicycloïde à surface de dent combinée ou de la bague hypocycloïde à surface de dent combinée ; et des équations paramétriques de la courbe d'engrènement de la bague épicycloïde à surface de dent combinée dans un système de coordonnées rectangulaires dans l'espace sont :

$$\begin{cases} x = R\cos\varphi - A\cos[(1+Z_c)\varphi] \\ y = R\sin\varphi - A\sin[(1+Z_c)\varphi] \end{cases} \qquad \varphi \in [0, 2\pi)$$

des équations paramétriques de la courbe d'engrènement de la bague hypocycloïde à surface de dent combinée dans le système de coordonnées rectangulaires dans l'espace sont :

$$\begin{cases} x = R\cos\varphi + A\cos[(1-Z_c)\varphi] \\ y = R\sin\varphi + A\sin[(1-Z_c)\varphi] \end{cases} \qquad \varphi \in [0, 2\pi)$$

dans lequel, $R$ désigne un rayon de la courbe d'engrènement ; A désigne l'amplitude de la courbe d'engrènement ; et $Z_c$ désigne un nombre d'onde de la courbe d'engrènement.

3. Mécanisme de transmission à dent mobiles cycloïdales à surface de dent combinée selon la revendication 2, dans lequel un rayon de courbure $p$ de la courbe d'engrènement est :

$$\rho = \frac{\sqrt{\left[\left(\dfrac{dx}{d\varphi}\right)^2 + \left(\dfrac{dy}{d\varphi}\right)^2\right]^3}}{\dfrac{dx}{d\varphi}\dfrac{d^2y}{d\varphi^2} - \dfrac{dy}{d\varphi}\dfrac{d^2x}{d\varphi^2}} \qquad \varphi \in [0, 2\pi)$$

4. Mécanisme de transmission à dent mobiles cycloïdales à surface de dent combinée selon la revendication 3, dans lequel une distance maximale d'un point sur la surface théorique de dent mobile à un axe de la surface théorique de dent mobile est $D_{max}$ :

$$\rho_{1\min} \geq D_{\max} > \rho_{\min}$$

dans lequel $p_{min}$ désigne un rayon de courbure minimum $p$ de la courbe d'engrènement ; et
$p_{1min}$ désigne un rayon de courbure minimum du segment de courbe d'engrènement correspondant à la surface de dent positive ou à la surface de dent négative.

5. Mécanisme de transmission à dent mobiles cycloïdales à surface de dent combinée selon la revendication 4, dans lequel la première largeur $\varDelta$ satisfait :

$$\Delta \leq D_{\max}$$

dans lequel, $D_{max}$ désigne la distance maximale du point sur la surface théorique de dent mobile à l'axe de la surface théorique de dent mobile.

6. Mécanisme de transmission à dent mobiles cycloïdales à surface de dent combinée selon la revendication 1, dans lequel lorsqu'un engrenage mobile est fourni, la pluralité de dents mobiles sont en contact l'une avec l'autre, et chacune s'engrène avec un engrenage cycloïdal et un engrenage mobile, et la pluralité de fentes de dent mobiles (5) sur l'engrenage mobile (4) ne s'étendent pas à travers l'engrenage mobile.

**7.** Mécanisme de transmission à dent mobiles cycloïdales à surface de dent combinée selon la revendication 6, dans lequel la pluralité de fentes de dent mobiles sont formées en combinant un cercle de surfaces de fente de contact (501) et de surfaces de fente sans contact (502) équiréparties avec un même nombre que la pluralité de dents mobiles ; la surface de fente de contact est en contact d'engrènement avec la dent mobile ; la surface de fente sans contact est une surface de transition entre deux surfaces de fente de contact adjacentes ; et la surface de fente sans contact n'est pas en contact avec la dent mobile.

**8.** Mécanisme de transmission à dent mobiles cycloïdales à surface de dent combinée selon la revendication 1, lorsque deux engrenages cycloïdaux sont fournis,
dans lequel la pluralité de dents mobiles sont en contact l'une avec l'autre, et chacune s'engrène avec un engrenage cycloïdal à bague épicycloïde à surface de dent combinée et un engrenage cycloïdal à bague hypocycloïde à surface de dent combinée.

**9.** Mécanisme de transmission à dent mobiles cycloïdales à surface de dent combinée selon la revendication 6 ou 8, dans lequel une distance maximale d'un point sur la surface théorique de dent mobile à un axe de la surface théorique de dent mobile est $D_{max}$ :

$$D_{max} = R\sin(\pi / Z_b)$$

dans laquelle $R$ désigne un rayon de la courbe d'engrènement ; et $Z_b$ désigne un nombre de dents mobiles.

**10.** Mécanisme de transmission à dent mobiles cycloïdales à surface de dent combinée selon la revendication 1, dans lequel lorsqu'un engrenage mobile est fourni, la pluralité de dents mobiles s'engrènent chacune avec un engrenage cycloïdal à bague épicycloïde à surface de dent combinée, l'engrenage mobile et un engrenage cycloïdal à bague hypocycloïde à surface de dent combinée ; l'engrenage mobile est situé entre l'engrenage cycloïdal à bague épicycloïde à surface de dent combinée et l'engrenage cycloïdal à bague hypocycloïde à surface de dent combinée ; la pluralité de fentes de dent mobiles sur l'engrenage mobile passent à travers l'engrenage mobile ; et l'engrenage mobile est sous forme d'un disque, d'un anneau circulaire ou d'un anneau conique.

FIG. 1

FIG. 2

FIG. 3

FIG. 4

FIG. 5

FIG. 6

$A_1$

3

102

FIG. 7

3

102

FIG. 8

$A_2$

3

101

102

FIG. 9

FIG. 10

FIG. 11

FIG. 12

Ⅱ

103

3

101

102

FIG. 13

A1

3

101

FIG. 15

FIG. 14

FIG. 16

FIG. 17

FIG. 18

$A_4$

Ⅲ

3

101

102

FIG. 19

Ⅳ

104

101

3

102

FIG. 20

101

Ⅳ

3

102

104

FIG. 21

FIG. 22

FIG. 23

FIG. 24

FIG. 25

FIG. 26

FIG. 27

FIG. 28

FIG. 29

FIG. 30

FIG. 31

FIG. 32

FIG. 33

FIG. 34

FIG. 35

FIG. 36

FIG. 37

FIG. 38

FIG. 39

FIG. 40

FIG. 41

FIG. 42

FIG. 43

FIG. 44

FIG. 45

FIG. 46

FIG. 47

FIG. 48

FIG. 49

FIG. 50

FIG. 51

FIG. 52

FIG. 53

FIG. 54

FIG. 55

FIG. 56

FIG. 57

FIG. 58

FIG. 59

FIG. 60

FIG. 61

FIG. 62

FIG. 63

FIG. 64

FIG. 65

6502    6501

6503

FIG. 66

6601    6602

FIG. 67

6701    6702

FIG. 68

6801    6802

FIG. 69

FIG. 70

FIG. 71

7002

7001

7003

FIG. 72

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201721031991
- CN 107165986A
- CN 106152945A
- US 2019285152 A1